# EUROPEAN PATENT SPECIFICATION

(11) **EP 4 585 288 B1**
(45) Date of publication and mention of the grant of the patent: **04.11.2026**
(21) Application number: 24151725.9
(22) Date of filing: 12.01.2024
(51) Int. Cl.: B01D 21/00, B01D 21/24

(54) **A SEPARATOR FOR SEPARATING SOLIDS FROM A SOLID-LIQUID MIXTURE**
TRENNVORRICHTUNG ZUM TRENNEN VON FESTSTOFFEN AUS EINER FESTSTOFF-FLÜSSIGKEITSMISCHUNG
SÉPARATEUR POUR SÉPARER DES SOLIDES D'UN MÉLANGE SOLIDE-LIQUIDE

(43) Date of publication of application: 16.07.2025
(73) Proprietor: Hydro International Ltd, Cleveden BS21 6FT (GB)
(72) Inventor: ROBERTS, Andrew, Clevedon, BS21 5LD (GB); JARMAN, Daniel, Bristol, BS29 2RQ (GB); TABOR, Gavin, Exeter, EX4 4QF (GB); FIELDSEND, Jonathan, Exeter, EX4 4RN (GB)
(74) Representative: Haseltine Lake Kempner LLP

(56) References cited:
- KR-A- 20100 001 943
- US-A1- 2019 321 756
- US-A1- 2020 108 333
- US-A1- 2020 368 643

## Description

### Field of the invention

The invention relates to a separator for separating solids from a solid-liquid mixture.

### Background

Wastewater such as that arriving at a sewage treatment facility can contain grit which causes wear to processing equipment and, if the grit accumulates, loss of performance.

A separator for the removal of grit from wastewater flow is described in US6645382. The separator comprises a tray assembly made up of a plurality of stacked settling plates in the form of trays having a frustoconical shape. Each tray has a centrally located opening and a lip which extends about the periphery of the tray and projects inwardly. The trays are spaced apart axially so that wastewater may flow between the trays. The stacked trays are submerged in a vessel, such as a grit basin. An influent duct channels wastewater comprising a solid-liquid mixture in between the trays and ensures that the wastewater is distributed evenly across the tray stack. The influent duct is arranged to provide a tangential inlet such that a low energy vortex flow is established between adjacent trays. The low energy vortex allows grit particles entrained by the flow to settle on the sloping inner surface of each tray whereupon the particles gravitate towards and pass through the openings in the trays. The grit falls through the openings in underlying trays and out through the bottom of the tray assembly. The grit collects at the bottom of the separator from where it is removed as a concentrate. De-gritted wastewater flows out over the lips of the trays into the grit basin for further processing.

Furhter examples are shown in US2020108333, US2019321756 and KR20100001943.

In use, grit particles that have settled on the inner surface of each tray can become resuspended or be prevented from initially settling. This reduces the efficiency of the separator. It is therefore desirable to provide a separator for separating solids from a solid-liquid mixture that avoids or minimises the effects of this issue.

### Summary of the invention

According to an aspect there is described a separator for separating solids from a solid-liquid mixture, the separator having a separator axis and comprising a tray assembly, the tray assembly comprising a plurality of nested tray units, wherein each tray unit comprises: an outlet edge defining an outlet opening, the outlet opening having a centroid through which the separator axis extends; an overflow edge defining an overflow opening; and a surface extending between the outlet edge and the overflow edge, the surface defining an internal volume of the tray unit and an inlet opening for receiving a respective portion of the solid-liquid mixture into the internal volume, the surface having a settling portion, wherein the settling portion faces the separator axis and tapers inwardly toward the separator axis in a direction toward the outlet edge. A cross-sectional area bounded by the settling portion and defined perpendicular to the separator axis is at a maximum on a first plane of the tray unit. A cross-sectional profile of the settling portion on the first plane has a centroid. A first distance between the inlet opening and the centroid of the cross-sectional profile is greater than a second distance between the inlet opening and the separator axis.

The centroid of the cross-sectional profile of the settling portion on the first plane may be offset away from the separator axis by a separation distance. A ratio of the separation distance to a maximum width of the cross-sectional profile of the settling portion on the first plane may be: greater than 0.03; or greater than 0.07; or greater than 0.14; or greater than 0.16; or greater than 0.17.

The centroid of the cross-sectional profile of the settling portion on the first plane may be offset away from the separator axis by a separation distance. A ratio of the separation distance to a maximum width of the cross-sectional profile of the settling portion on the first plane may be: less than 0.19; or less than 0.185.

The ratio of the separation distance to the maximum width of the cross-sectional profile of the settling portion on the first plane may be referred to as the offset ratio *rₒ*. The offset ratio *rₒ* may be greater than about 0.002, for example, greater than about 0.005, or greater than about 0.01, or greater than about 0.02, or greater than about 0.0258, or greater than about 0.03, or greater than about 0.04, or greater than about 0.05, or greater than about 0.057, or greater than about 0.06, or greater than about 0.07, or greater than about 0.076, or greater than about 0.08, or greater than about 0.1, or greater than about 0.103, or greater than about 0.11, or greater than about 0.13, or greater than about 0.135, or greater than about 0.14, or greater than about 0.145, or greater than about 0.15, or greater than about 0.16, or greater than about 0.17, or greater than about 0.18, or greater than about 0.1805, or greater than about 0.185, or greater than about 0.19, or greater than about 0.191, or greater than about 0.2, or greater than about 0.25. The offset ratio *rₒ* may be less than about 0.3, for example, less than about 0.25, or less than about 0.2, or less than about 0.191, or less than about 0.19, or less than about 0.185, or less than about 0.1805, or less than about 0.18, or less than about 0.17, or less than about 0.16, or less than about 0.15, or less than about 0.145, or less than about 0.14, or less than about 0.135, or less than about 0.13, or less than about 0.11, or less than about 0.103, or less than about 0.1, or less than about 0.08, or less than about 0.076, or less than about 0.07, or less than about 0.06, or less than about 0.057, or less than about 0.05, or less than about 0.04, or less than about 0.03, or less than about 0.0258, or less than about 0.02, or less than about 0.01, or less than about 0.005. The offset ratio *rₒ* may be from about 0.002 to about 0.3, for example, from about 0.002 to about 0.25, or from about 0.002 to about 0.2, or from about 0.002 to about 0.191, or from about 0.002 to about 0.19, or from about 0.002 to about 0.185, or from about 0.002 to about 0.1805, or from about 0.002 to about 0.18, or from about 0.002 to about 0.17, or from about 0.002 to about 0.16, or from about 0.002 to about 0.15, or from about 0.002 to about 0.145, or from about 0.002 to about 0.14, or from about 0.002 to about 0.135, or from about 0.002 to about 0.13, or from about 0.002 to about 0.11, or from about 0.002 to about 0.103, or from about 0.002 to about 0.1, or from about 0.002 to about 0.08, or from about 0.002 to about 0.076, or from about 0.002 to about 0.07, or from about 0.002 to about 0.06, or from about 0.002 to about 0.057, or from about 0.002 to about 0.05, or from about 0.002 to about 0.04, or from about 0.002 to about 0.03, or from about 0.002 to about 0.0258, or from about 0.002 to about 0.02, or from about 0.002 to about 0.01 to about 0.01, or from about 0.002 to about 0.005, or from about 0.005 to about 0.3, or from about 0.005 to about 0.25, or from about 0.005 to about 0.2, or from about 0.005 to about 0.191, or from about 0.005 to about 0.19, or from about 0.005 to about 0.185, or from about 0.005 to about 0.1805, or from about 0.005 to about 0.18, or from about 0.005 to about 0.17, or from about 0.005 to about 0.16, or from about 0.005 to about 0.15, or from about 0.005 to about 0.145, or from about 0.005 to about 0.14, or from about 0.005 to about 0.135, or from about 0.005 to about 0.13, or from about 0.005 to about 0.11, or from about 0.005 to about 0.103, or from about 0.005 to about 0.1, or from about 0.005 to about 0.08, or from about 0.005 to about 0.076, or from about 0.005 to about 0.07, or from about 0.005 to about 0.06, or from about 0.005 to about 0.057, or from about 0.005 to about 0.05, or from about 0.005 to about 0.04, or from about 0.005 to about 0.03, or from about 0.005 to about 0.0258, or from about 0.005 to about 0.02, or from about 0.005 to about 0.01 to about 0.01, or from about 0.01 to about 0.3, or from about 0.01 to about 0.25, or from about 0.01 to about 0.2, or from about 0.01 to about 0.191, or from about 0.01 to about 0.19, or from about 0.1805 to about 0.185, or from about 0.01 to about 0.1805, or from about 0.01 to about 0.18, or from about 0.01 to about 0.17, or from about 0.01 to about 0.16, or from about 0.01 to about 0.15, or from about 0.01 to about 0.145, or from about 0.01 to about 0.14, or from about 0.01 to about 0.135, or from about 0.01 to about 0.13, or from about 0.01 to about 0.11, or from about 0.01 to about 0.103, or from about 0.01 to about 0.1, or from about 0.01 to about 0.08, or from about 0.01 to about 0.076, or from about 0.01 to about 0.07, or from about 0.01 to about 0.06, or from about 0.01 to about 0.057, or from about 0.01 to about 0.05, or from about 0.01 to about 0.04, or from about 0.01 to about 0.03, or from about 0.01 to about 0.0258, or from about 0.01 to about 0.02, or from about 0.02 to about 0.3, or from about 0.02 to about 0.25, or from about 0.02 to about 0.2, or from about 0.02 to about 0.191, or from about 0.02 to about 0.19, or from about 0.02 to about 0.185, or from about 0.02 to about 0.1805, or from about 0.02 to about 0.18, or from about 0.02 to about 0.17, or from about 0.02 to about 0.16, or from about 0.02 to about 0.15, or from about 0.02 to about 0.145, or from about 0.02 to about 0.14, or from about 0.02 to about 0.135, or from about 0.02 to about 0.13, or from about 0.02 to about 0.11, or from about 0.02 to about 0.103, or from about 0.02 to about 0.1, or from about 0.02 to about 0.08, or from about 0.02 to about 0.076, or from about 0.02 to about 0.07, or from about 0.02 to about 0.06, or from about 0.02 to about 0.057, or from about 0.02 to about 0.05, or from about 0.02 to about 0.04, or from about 0.02 to about 0.03, or from about 0.02 to about 0.0258, or from about 0.0258 to about 0.3, or from about 0.0258 to about 0.25, or from about 0.0258 to about 0.2, or from about 0.0258 to about 0.191, or from about 0.0258 to about 0.19, or from about 0.0258 to about 0.185, or from about 0.0258 to about 0.1805, or from about 0.0258 to about 0.18, or from about 0.0258 to about 0.17, or from about 0.0258 to about 0.16, or from about 0.0258 to about 0.15, or from about 0.0258 to about 0.145, or from about 0.0258 to about 0.14, or from about 0.0258 to about 0.135, or from about 0.0258 to about 0.13, or from about 0.0258 to about 0.11, or from about 0.0258 to about 0.103, or from about 0.0258 to about 0.1, or from about 0.0258 to about 0.08, or from about 0.0258 to about 0.076, or from about 0.0258 to about 0.07, or from about 0.0258 to about 0.06, or from about 0.0258 to about 0.057, or from about 0.0258 to about 0.05, or from about 0.0258 to about 0.04, or from about 0.0258 to about 0.03, or from about 0.03 to about 0.3, or from about 0.03 to about 0.25, or from about 0.03 to about 0.2, or from about 0.03 to about 0.191, or from about 0.03 to about 0.19, or from about 0.03 to about 0.185, or from about 0.03 to about 0.1805, or from about 0.03 to about 0.18, or from about 0.03 to about 0.17, or from about 0.03 to about 0.16, or from about 0.03 to about 0.15, or from about 0.03 to about 0.145, or from about 0.03 to about 0.14, or from about 0.03 to about 0.135, or from about 0.03 to about 0.13, or from about 0.03 to about 0.11, or from about 0.03 to about 0.103, or from about 0.03 to about 0.1, or from about 0.03 to about 0.08, or from about 0.03 to about 0.076, or from about 0.03 to about 0.07, or from about 0.03 to about 0.06, or from about 0.03 to about 0.057, or from about 0.03 to about 0.05, or from about 0.03 to about 0.04, or from about 0.04 to about 0.3, or from about 0.04 to about 0.25, or from about 0.04 to about 0.2, or from about 0.04 to about 0.191, or from about 0.04 to about 0.19, or from about 0.04 to about 0.185, or from about 0.04 to about 0.1805, or from about 0.04 to about 0.18, or from about 0.04 to about 0.17, or from about 0.04 to about 0.16, or from about 0.04 to about 0.15, or from about 0.04 to about 0.145, or from about 0.04 to about 0.14, or from about 0.04 to about 0.135, or from about 0.04 to about 0.13, or from about 0.04 to about 0.11, or from about 0.04 to about 0.103, or from about 0.04 to about 0.1, or from about 0.04 to about 0.08, or from about 0.04 to about 0.076, or from about 0.04 to about 0.07, or from about 0.04 to about 0.06, or from about 0.04 to about 0.057, or from about 0.04 to about 0.05, or from about 0.05 to about 0.3, or from about 0.05 to about 0.25, or from about 0.05 to about 0.2, or from about 0.05 to about 0.191, or from about 0.05 to about 0.19, or from about 0.05 to about 0.185, or from about 0.05 to about 0.1805, or from about 0.05 to about 0.18, or from about 0.05 to about 0.17, or from about 0.05 to about 0.16, or from about 0.05 to about 0.15, or from about 0.05 to about 0.145, or from about 0.05 to about 0.14, or from about 0.05 to about 0.135, or from about 0.05 to about 0.13, or from about 0.05 to about 0.11, or from about 0.05 to about 0.103, or from about 0.05 to about 0.1, or from about 0.05 to about 0.08, or from about 0.05 to about 0.076, or from about 0.05 to about 0.07, or from about 0.05 to about 0.06, or from about 0.05 to about 0.057, or from about 0.057 to about 0.3, or from about 0.057 to about 0.25, or from about 0.057 to about 0.2, or from about 0.057 to about 0.191, or from about 0.057 to about 0.19, or from about 0.057 to about 0.185, or from about 0.057 to about 0.1805, or from about 0.057 to about 0.18, or from about 0.057 to about 0.17, or from about 0.057 to about 0.16, or from about 0.057 to about 0.15, or from about 0.057 to about 0.145, or from about 0.057 to about 0.14, or from about 0.057 to about 0.135, or from about 0.057 to about 0.13, or from about 0.057 to about 0.11, or from about 0.057 to about 0.103, or from about 0.057 to about 0.1, or from about 0.057 to about 0.08, or from about 0.057 to about 0.076, or from about 0.057 to about 0.07, or from about 0.057 to about 0.06, or from about 0.06 to about 0.3, or from about 0.06 to about 0.25, or from about 0.06 to about 0.2, or from about 0.06 to about 0.191, or from about 0.06 to about 0.19, or from about 0.06 to about 0.185, or from about 0.06 to about 0.1805, or from about 0.06 to about 0.18, or from about 0.06 to about 0.17, or from about 0.06 to about 0.16, or from about 0.06 to about 0.15, or from about 0.06 to about 0.145, or from about 0.06 to about 0.14, or from about 0.06 to about 0.135, or from about 0.06 to about 0.13, or from about 0.06 to about 0.11, or from about 0.06 to about 0.103, or from about 0.06 to about 0.1, or from about 0.06 to about 0.08, or from about 0.06 to about 0.076, or from about 0.06 to about 0.07, or from about 0.07 to about 0.3, or from about 0.07 to about 0.25, or from about 0.07 to about 0.2, or from about 0.07 to about 0.191, or from about 0.07 to about 0.19, or from about 0.07 to about 0.185, or from about 0.07 to about 0.1805, or from about 0.07 to about 0.18, or from about 0.07 to about 0.17, or from about 0.07 to about 0.16, or from about 0.07 to about 0.15, or from about 0.07 to about 0.145, or from about 0.07 to about 0.14, or from about 0.07 to about 0.135, or from about 0.07 to about 0.13, or from about 0.07 to about 0.11, or from about 0.07 to about 0.103, or from about 0.07 to about 0.1, or from about 0.07 to about 0.08, or from about 0.07 to about 0.076, or from about 0.076 to about 0.3, or from about 0.076 to about 0.25, or from about 0.076 to about 0.2, or from about 0.076 to about 0.191, or from about 0.076 to about 0.19, or from about 0.076 to about 0.185, or from about 0.076 to about 0.1805, or from about 0.076 to about 0.18, or from about 0.076 to about 0.17, or from about 0.076 to about 0.16, or from about 0.076 to about 0.15, or from about 0.076 to about 0.145, or from about 0.076 to about 0.14, or from about 0.076 to about 0.135, or from about 0.076 to about 0.13, or from about 0.076 to about 0.11, or from about 0.076 to about 0.103, or from about 0.076 to about 0.1, or from about 0.076 to about 0.08, or from about 0.08 to about 0.3, or from about 0.08 to about 0.25, or from about 0.08 to about 0.2, or from about 0.08 to about 0.191, or from about 0.08 to about 0.19, or from about 0.08 to about 0.185, or from about 0.08 to about 0.1805, or from about 0.08 to about 0.18, or from about 0.08 to about 0.17, or from about 0.08 to about 0.16, or from about 0.08 to about 0.15, or from about 0.08 to about 0.145, or from about 0.08 to about 0.14, or from about 0.08 to about 0.135, or from about 0.08 to about 0.13, or from about 0.08 to about 0.11, or from about 0.08 to about 0.103, or from about 0.08 to about 0.1, or from about 0.1 to about 0.3, or from about 0.1 to about 0.25, or from about 0.1 to about 0.2, or from about 0.1 to about 0.191, or from about 0.1 to about 0.19, or from about 0.1 to about 0.185, or from about 0.1 to about 0.1805, or from about 0.1 to about 0.18, or from about 0.1 to about 0.17, or from about 0.1 to about 0.16, or from about 0.1 to about 0.15, or from about 0.1 to about 0.145, or from about 0.1 to about 0.14, or from about 0.1 to about 0.135, or from about 0.1 to about 0.13, or from about 0.1 to about 0.11, or from about 0.1 to about 0.103, or from about 0.103 to about 0.3, or from about 0.103 to about 0.25, or from about 0.103 to about 0.2, or from about 0.103 to about 0.191, or from about 0.103 to about 0.19, or from about 0.103 to about 0.185, or from about 0.103 to about 0.1805, or from about 0.103 to about 0.18, or from about 0.103 to about 0.17, or from about 0.103 to about 0.16, or from about 0.103 to about 0.15, or from about 0.103 to about 0.145, or from about 0.103 to about 0.14, or from about 0.103 to about 0.135, or from about 0.103 to about 0.13, or from about 0.103 to about 0.11, or from about 0.11 to about 0.3, or from about 0.11 to about 0.25, or from about 0.11 to about 0.2, or from about 0.11 to about 0.191, or from about 0.11 to about 0.19, or from about 0.11 to about 0.185, or from about 0.11 to about 0.1805, or from about 0.11 to about 0.18, or from about 0.11 to about 0.17, or from about 0.11 to about 0.16, or from about 0.11 to about 0.15, or from about 0.11 to about 0.145, or from about 0.11 to about 0.14, or from about 0.11 to about 0.135, or from about 0.11 to about 0.13, or from about 0.13 to about 0.3, or from about 0.13 to about 0.25, or from about 0.13 to about 0.2, or from about 0.13 to about 0.191, or from about 0.13 to about 0.19, or from about 0.13 to about 0.185, or from about 0.13 to about 0.1805, or from about 0.13 to about 0.18, or from about 0.13 to about 0.17, or from about 0.13 to about 0.16, or from about 0.13 to about 0.15, or from about 0.13 to about 0.145, or from about 0.13 to about 0.14, or from about 0.13 to about 0.135, or from about 0.135 to about 0.3, or from about 0.135 to about 0.25, or from about 0.135 to about 0.2, or from about 0.135 to about 0.191, or from about 0.135 to about 0.19, or from about 0.135 to about 0.185, or from about 0.135 to about 0.1805, or from about 0.135 to about 0.18, or from about 0.135 to about 0.17, or from about 0.135 to about 0.16, or from about 0.135 to about 0.15, or from about 0.135 to about 0.145, or from about 0.135 to about 0.14, or from about 0.14 to about 0.3, or from about 0.14 to about 0.25, or from about 0.14 to about 0.2, or from about 0.14 to about 0.191, or from about 0.14 to about 0.19, or from about 0.14 to about 0.185, or from about 0.14 to about 0.1805, or from about 0.14 to about 0.18, or from about 0.14 to about 0.17, or from about 0.14 to about 0.16, or from about 0.14 to about 0.15, or from about 0.14 to about 0.145, or from about 0.145 to about 0.3, or from about 0.145 to about 0.25, or from about 0.145 to about 0.2, or from about 0.145 to about 0.191, or from about 0.145 to about 0.19, or from about 0.145 to about 0.185, or from about 0.145 to about 0.1805, or from about 0.145 to about 0.18, or from about 0.145 to about 0.17, or from about 0.145 to about 0.16, or from about 0.145 to about 0.15, or from about 0.15 to about 0.3, or from about 0.15 to about 0.25, or from about 0.15 to about 0.2, or from about 0.15 to about 0.191, or from about 0.15 to about 0.19, or from about 0.15 to about 0.185, or from about 0.15 to about 0.1805, or from about 0.15 to about 0.18, or from about 0.15 to about 0.17, or from about 0.15 to about 0.16, or from about 0.16 to about 0.3, or from about 0.16 to about 0.25, or from about 0.16 to about 0.2, or from about 0.16 to about 0.191, or from about 0.16 to about 0.19, or from about 0.16 to about 0.185, or from about 0.16 to about 0.1805, or from about 0.16 to about 0.18, or from about 0.16 to about 0.17, or from about 0.17 to about 0.3, or from about 0.17 to about 0.25, or from about 0.17 to about 0.2, or from about 0.17 to about 0.191, or from about 0.17 to about 0.19, or from about 0.17 to about 0.185, or from about 0.17 to about 0.1805, or from about 0.17 to about 0.18, or from about 0.18 to about 0.3, or from about 0.18 to about 0.25, or from about 0.18 to about 0.2, or from about 0.18 to about 0.191, or from about 0.18 to about 0.19, or from about 0.18 to about 0.185, or from about 0.18 to about 0.1805, or from about 0.1805 to about 0.3, or from about 0.1805 to about 0.25, or from about 0.1805 to about 0.2, or from about 0.1805 to about 0.191, or from about 0.1805 to about 0.19, or from about 0.1805 to about 0.185, or from about 0.185 to about 0.3, or from about 0.185 to about 0.25, or from about 0.185 to about 0.2, or from about 0.185 to about 0.191, or from about 0.185 to about 0.19, or from about 0.19 to about 0.3, or from about 0.19 to about 0.25, or from about 0.19 to about 0.2, or from about 0.19 to about 0.191, or from about 0.191 to about 0.3, or from about 0.191 to about 0.25, or from about 0.191 to about 0.2, or from about 0.2 to about 0.3, or from about 0.2 to about 0.25, or from about 0.25 to about 0.3.

Providing an offset ratio *rₒ* that is less than 0.002 has been found not to inhibit the development of the recirculating, precessing vortex core or reduce the proportion of the solid-liquid mixture within the internal volume that is not directed to the outlet opening to the extent necessary to provide a significant improvement in the underflow collection efficiency *η_{underflow}* or the total collection efficiency *ηₜₒₜₐₗ* of the separator. Providing an offset ratio *rₒ* that is greater than about 0.3 has been found to result in insufficient spacing between adjacent tray units of the tray assembly, which can lead to blockages in the tray assembly.

Each of the tray units may further comprise a second plane that extends perpendicular to the separator axis and is equidistant from the first plane and the centroid of the outlet opening of the respective tray unit. A first difference between a maximum width of the cross-sectional profile of the settling portion on the second plane and a maximum width of the outlet opening may be less than half a second difference between a maximum width of the cross-sectional profile of the settling portion on the first plane and the maximum width of the outlet opening.

A ratio of the first difference to the second difference may be: less than 0.38; or less than 0.35; or less than 0.33; or less than 0.32; or less than 0.307; or less than 0.303.

A ratio of the first difference to the second difference may be: greater than 0.285; or greater than 0.29.

The ratio of the first difference to the second difference may be referred to as the concavity ratio *r_{c}.* The concavity ratio *r_{c}* may be less than about 0.498, for example, less than about 0.48, or less than about 0.47, or less than about 0.46, or less than about 0.45, or less than about 0.43, or less than about 0.42, or less than about 0.41, or less than about 0.39, or less than about 0.38, or less than about 0.367, or less than about 0.36, or less than about 0.35, or less than about 0.33, or less than about 0.32, or less than about 0.307, or less than about 0.303, or less than about 0.298, or less than about 0.29, or less than about 0.285, or less than about 0.27, or less than about 0.24, or less than about 0.2, or less than about 0.185, or less than about 0.15. The concavity ratio *r_{c}* may be greater than about 0.1, for example, greater than about 0.15, or greater than about 0.185, or greater than about 0.2, or greater than about 0.24, or greater than about 0.27, or greater than about 0.285, or greater than about 0.29, or greater than about 0.298, or greater than about 0.303, or greater than about 0.307, or greater than about 0.32, or greater than about 0.33, or greater than about 0.35, or greater than about 0.36, or greater than about 0.367, or greater than about 0.38, or greater than about 0.39, or greater than about 0.41, or greater than about 0.42, or greater than about 0.43, or greater than about 0.45, or greater than about 0.46, or greater than about 0.47, or greater than about 0.48. The concavity ratio *r_{c}* may be from about 0.1 to about 0.498, for example, from about 0.1 to about 0.48, or from about 0.1 to about 0.47, or from about 0.1 to about 0.46, or from about 0.1 to about 0.45, or from about 0.1 to about 0.43, or from about 0.1 to about 0.42, or from about 0.1 to about 0.41, or from about 0.1 to about 0.39, or from about 0.1 to about 0.38, or from about 0.1 to about 0.367, or from about 0.1 to about to about 0.36, or from about 0.1 to about 0.35, or from about 0.1 to about 0.33, or from about 0.1 to about 0.32, or from about 0.1 to about 0.307, or from about 0.1 to about 0.303, or from about 0.1 to about 0.298, or from about 0.1 to about 0.29, or from about 0.1 to about 0.285, or from about 0.1 to about 0.27, or from about 0.1 to about 0.24, or from about 0.1 to about 0.2, or from about 0.1 to about 0.185, or from about 0.1 to about 0.15, or from about 0.15 to about 0.498, or from about 0.15 to about 0.48, or from about 0.15 to about 0.47, or from about 0.15 to about 0.46, or from about 0.15 to about 0.45, or from about 0.15 to about 0.43, or from about 0.15 to about 0.42, or from about 0.15 to about 0.41, or from about 0.15 to about 0.39, or from about 0.15 to about 0.38, or from about 0.15 to about 0.367, or from about 0.15 to about to about 0.36, or from about 0.15 to about 0.35, or from about 0.15 to about 0.33, or from about 0.15 to about 0.32, or from about 0.15 to about 0.307, or from about 0.15 to about 0.303, or from about 0.15 to about 0.298, or from about 0.15 to about 0.29, or from about 0.15 to about 0.285, or from about 0.15 to about 0.27, or from about 0.15 to about 0.24, or from about 0.15 to about 0.2, or from about 0.15 to about 0.185, or from about 0.185 to about 0.498, or from about 0.185 to about 0.48, or from about 0.185 to about 0.47, or from about 0.185 to about 0.46, or from about 0.185 to about 0.45, or from about 0.185 to about 0.43, or from about 0.185 to about 0.42, or from about 0.185 to about 0.41, or from about 0.185 to about 0.39, or from about 0.185 to about 0.38, or from about 0.185 to about 0.367, or from about 0.185 to about to about 0.36, or from about 0.185 to about 0.35, or from about 0.185 to about 0.33, or from about 0.185 to about 0.32, or from about 0.185 to about 0.307, or from about 0.185 to about 0.303, or from about 0.185 to about 0.298, or from about 0.185 to about 0.29, or from about 0.185 to about 0.285, or from about 0.185 to about 0.27, or from about 0.185 to about 0.24, or from about 0.185 to about 0.2, or from about 0.2 to about 0.498, or from about 0.2 to about 0.48, or from about 0.2 to about 0.47, or from about 0.2 to about 0.46, or from about 0.2 to about 0.45, or from about 0.2 to about 0.43, or from about 0.2 to about 0.42, or from about 0.2 to about 0.41, or from about 0.2 to about 0.39, or from about 0.2 to about 0.38, or from about 0.2 to about 0.367, or from about 0.2 to about to about 0.36, or from about 0.2 to about 0.35, or from about 0.2 to about 0.33, or from about 0.2 to about 0.32, or from about 0.2 to about 0.307, or from about 0.2 to about 0.303, or from about 0.2 to about 0.298, or from about 0.2 to about 0.29, or from about 0.2 to about 0.285, or from about 0.2 to about 0.27, or from about 0.2 to about 0.24, or from about 0.24 to about 0.498, or from about 0.24 to about 0.48, or from about 0.24 to about 0.47, or from about 0.24 to about 0.46, or from about 0.24 to about 0.45, or from about 0.24 to about 0.43, or from about 0.24 to about 0.42, or from about 0.24 to about 0.41, or from about 0.24 to about 0.39, or from about 0.24 to about 0.38, or from about 0.24 to about 0.367, or from about 0.24 to about to about 0.36, or from about 0.24 to about 0.35, or from about 0.24 to about 0.33, or from about 0.24 to about 0.32, or from about 0.24 to about 0.307, or from about 0.24 to about 0.303, or from about 0.24 to about 0.298, or from about 0.24 to about 0.29, or from about 0.24 to about 0.285, or from about 0.24 to about 0.27, or from about 0.27 to about 0.498, or from about 0.27 to about 0.48, or from about 0.27 to about 0.47, or from about 0.27 to about 0.46, or from about 0.27 to about 0.45, or from about 0.27 to about 0.43, or from about 0.27 to about 0.42, or from about 0.27 to about 0.41, or from about 0.27 to about 0.39, or from about 0.27 to about 0.38, or from about 0.27 to about 0.367, or from about 0.27 to about to about 0.36, or from about 0.27 to about 0.35, or from about 0.27 to about 0.33, or from about 0.27 to about 0.32, or from about 0.27 to about 0.307, or from about 0.27 to about 0.303, or from about 0.27 to about 0.298, or from about 0.27 to about 0.29, or from about 0.27 to about 0.285, or from about 0.285 to about 0.498, or from about 0.285 to about 0.48, or from about 0.285 to about 0.47, or from about 0.285 to about 0.46, or from about 0.285 to about 0.45, or from about 0.285 to about 0.43, or from about 0.285 to about 0.42, or from about 0.285 to about 0.41, or from about 0.285 to about 0.39, or from about 0.285 to about 0.38, or from about 0.285 to about 0.367, or from about 0.285 to about to about 0.36, or from about 0.285 to about 0.35, or from about 0.285 to about 0.33, or from about 0.285 to about 0.32, or from about 0.285 to about 0.307, or from about 0.285 to about 0.303, or from about 0.285 to about 0.298, or from about 0.285 to about 0.29, or from about 0.29 to about 0.498, or from about 0.29 to about 0.48, or from about 0.29 to about 0.47, or from about 0.29 to about 0.46, or from about 0.29 to about 0.45, or from about 0.29 to about 0.43, or from about 0.29 to about 0.42, or from about 0.29 to about 0.41, or from about 0.29 to about 0.39, or from about 0.29 to about 0.38, or from about 0.29 to about 0.367, or from about 0.29 to about to about 0.36, or from about 0.29 to about 0.35, or from about 0.29 to about 0.33, or from about 0.29 to about 0.32, or from about 0.29 to about 0.307, or from about 0.29 to about 0.303, or from about 0.29 to about 0.298, or from about 0.298 to about 0.498, or from about 0.298 to about 0.48, or from about 0.298 to about 0.47, or from about 0.298 to about 0.46, or from about 0.298 to about 0.45, or from about 0.298 to about 0.43, or from about 0.298 to about 0.42, or from about 0.298 to about 0.41, or from about 0.298 to about 0.39, or from about 0.298 to about 0.38, or from about 0.298 to about 0.367, or from about 0.298 to about to about 0.36, or from about 0.298 to about 0.35, or from about 0.298 to about 0.33, or from about 0.298 to about 0.32, or from about 0.298 to about 0.307, or from about 0.298 to about 0.303, or from about 0.303 to about 0.498, or from about 0.303 to about 0.48, or from about 0.303 to about 0.47, or from about 0.303 to about 0.46, or from about 0.303 to about 0.45, or from about 0.303 to about 0.43, or from about 0.303 to about 0.42, or from about 0.303 to about 0.41, or from about 0.303 to about 0.39, or from about 0.303 to about 0.38, or from about 0.303 to about 0.367, or from about 0.303 to about to about 0.36, or from about 0.303 to about 0.35, or from about 0.303 to about 0.33, or from about 0.303 to about 0.32, or from about 0.303 to about 0.307, or from about 0.307 to about 0.498, or from about 0.307 to about 0.48, or from about 0.307 to about 0.47, or from about 0.307 to about 0.46, or from about 0.307 to about 0.45, or from about 0.307 to about 0.43, or from about 0.307 to about 0.42, or from about 0.307 to about 0.41, or from about 0.307 to about 0.39, or from about 0.307 to about 0.38, or from about 0.307 to about 0.367, or from about 0.307 to about to about 0.36, or from about 0.307 to about 0.35, or from about 0.307 to about 0.33, or from about 0.307 to about 0.32, or from about 0.32 to about 0.498, or from about 0.32 to about 0.48, or from about 0.32 to about 0.47, or from about 0.32 to about 0.46, or from about 0.32 to about 0.45, or from about 0.32 to about 0.43, or from about 0.32 to about 0.42, or from about 0.32 to about 0.41, or from about 0.32 to about 0.39, or from about 0.32 to about 0.38, or from about 0.32 to about 0.367, or from about 0.32 to about to about 0.36, or from about 0.32 to about 0.35, or from about 0.32 to about 0.33, or from about 0.33 to about 0.498, or from about 0.33 to about 0.48, or from about 0.33 to about 0.47, or from about 0.33 to about 0.46, or from about 0.33 to about 0.45, or from about 0.33 to about 0.43, or from about 0.33 to about 0.42, or from about 0.33 to about 0.41, or from about 0.33 to about 0.39, or from about 0.33 to about 0.38, or from about 0.33 to about 0.367, or from about 0.33 to about to about 0.36, or from about 0.33 to about 0.35, or from about 0.35 to about 0.498, or from about 0.35 to about 0.48, or from about 0.35 to about 0.47, or from about 0.35 to about 0.46, or from about 0.35 to about 0.45, or from about 0.35 to about 0.43, or from about 0.35 to about 0.42, or from about 0.35 to about 0.41, or from about 0.35 to about 0.39, or from about 0.35 to about 0.38, or from about 0.35 to about 0.367, or from about 0.35 to about to about 0.36, or from about 0.36 to about 0.498, or from about 0.36 to about 0.48, or from about 0.36 to about 0.47, or from about 0.36 to about 0.46, or from about 0.36 to about 0.45, or from about 0.36 to about 0.43, or from about 0.36 to about 0.42, or from about 0.36 to about 0.41, or from about 0.36 to about 0.39, or from about 0.36 to about 0.38, or from about 0.36 to about 0.367, or from about 0.367 to about 0.498, or from about 0.367 to about 0.48, or from about 0.367 to about 0.47, or from about 0.367 to about 0.46, or from about 0.367 to about 0.45, or from about 0.367 to about 0.43, or from about 0.367 to about 0.42, or from about 0.367 to about 0.41, or from about 0.367 to about 0.39, or from about 0.367 to about 0.38, or from about 0.38 to about 0.498, or from about 0.38 to about 0.48, or from about 0.38 to about 0.47, or from about 0.38 to about 0.46, or from about 0.38 to about 0.45, or from about 0.38 to about 0.43, or from about 0.38 to about 0.42, or from about 0.38 to about 0.41, or from about 0.38 to about 0.39, or from about 0.39 to about 0.498, or from about 0.39 to about 0.48, or from about 0.39 to about 0.47, or from about 0.39 to about 0.46, or from about 0.39 to about 0.45, or from about 0.39 to about 0.43, or from about 0.39 to about 0.42, or from about 0.39 to about 0.41, or from about 0.41 to about 0.498, or from about 0.41 to about 0.48, or from about 0.41 to about 0.47, or from about 0.41 to about 0.46, or from about 0.41 to about 0.45, or from about 0.41 to about 0.43, or from about 0.41 to about 0.42, or from about 0.42 to about 0.498, or from about 0.42 to about 0.48, or from about 0.42 to about 0.47, or from about 0.42 to about 0.46, or from about 0.42 to about 0.45, or from about 0.42 to about 0.43, or from about 0.43 to about 0.498, or from about 0.43 to about 0.48, or from about 0.43 to about 0.47, or from about 0.43 to about 0.46, or from about 0.43 to about 0.45, or from about 0.45 to about 0.498, or from about 0.45 to about 0.48, or from about 0.45 to about 0.47, or from about 0.45 to about 0.46, or from about 0.46 to about 0.498, or from about 0.46 to about 0.48, or from about 0.46 to about 0.47, or from about 0.47 to about 0.498, or from about 0.47 to about 0.48, or from about 0.48 to about 0.498.

**Providing** a concavity ratio *r_{c}* is that is greater than 0.498 has been found not to reduce resuspension of solids, reduce the length of the process cycle, reduce slow moving areas of fluid, reduce separation zones or reduce the overall residence time of fluid within the separator to the extent necessary to provide a significant improvement in the underflow collection efficiency *η_{underflow}* or the total collection efficiency *ηₜₒₜₐₗ* of the separator. Providing a concavity ratio *r_{c}* that is less than 0.1 has been found to result in insufficient spacing between adjacent tray units of the tray assembly, which can lead to blockages in the tray assembly.

The cross-sectional profile of the settling portion may be concave.

The outlet opening of each of the plurality of tray units may be circular.

The surface of each of the plurality of tray units may further comprise a lip portion. The lip portion of each of the tray units may face away from the separator axis. The lip portion of each of the trey units may define the overflow edge of the respective tray unit. The lip portion of each of the tray units may be parallel with a portion of the settling portion of the respective tray unit.

The separator may further comprise a plurality of inlet passageways. Each of the plurality of inlet passageways may be configured to supply a portion of the solid-liquid mixture into the internal volume of a respective tray unit via its respective inlet opening. A centreline of each of the inlet passageways may be disposed on a respective inlet plane that is parallel to the separator axis. The centroid of the cross-sectional profile of the settling portion on the first plane of each of the tray units may be offset away from the separator axis in a direction that is perpendicular to the inlet plane of the respective inlet passageway that supplies the respective tray unit with the respective portion of the solid-liquid mixture.

The separator may comprise a vessel. The separator may comprise a sump. The tray assembly may be disposed within the vessel. A base of the treatment vessel may comprise a recess that opens into the sump. A lowermost tray unit of the plurality of tray units may be disposed within the recess.

A portion of the lowermost tray unit of the plurality of tray units defining the surface of the lowermost tray unit may be parallel with a surface of the recess.

A minimum gap may exist between the tray assembly and the vessel. The minimum gap between the tray assembly and the vessel may be: less than 182 mm, for example, less than 180 mm, or less than 178 mm, or less than 174 mm, or less than 168 mm, or less than 165 mm, or less than 162 mm, or less than 160 mm, or less than 155 mm, or less than 150 mm, or less than 148 mm, or less than 140 mm, or less than 130 mm, or less than 124 mm, or less than 118 mm, or less than 113 mm, or less than 110 mm, or less than 107 mm, or less than 105 mm, or less than 100 mm, or less than 90 mm, or less than 80 mm, or less than 77 mm, or less than 70 mm, or less than 65 mm.

The minimum gap between the tray assembly and the vessel may be referred to as the minimum tray assembly-treatment vessel gap. The minimum tray assembly-treatment vessel gap may be less than about 182 mm, for example, less than about 180 mm, or less than about 178 mm, or less than about 174 mm, or less than about 168 mm, or less than about 165 mm, or less than about 162 mm, or less than about 160 mm, or less than about 155 mm, or less than about 150 mm, or less than about 148 mm, or less than about 140 mm, or less than about 130 mm, or less than about 124 mm, or less than about 118 mm, or less than about 113 mm, or less than about 110 mm, or less than about 107 mm, or less than about 105 mm, or less than about 100 mm, or less than about 90 mm, or less than about 80 mm, or less than about 77 mm, or less than about 70 mm, or less than about 65 mm. The minimum tray assembly-treatment vessel gap may be greater than about 60 mm, for example, greater than about 60 mm, or greater than about 65 mm, or greater than about 70 mm, or greater than about 75 mm, or greater than about 77 mm, or greater than about 80 mm, or greater than about 90 mm, or greater than about 100 mm, or greater than about 105 mm, or greater than about 107 mm, or greater than about 110 mm, or greater than about 113 mm, or greater than about 118 mm, or greater than about 124 mm, or greater than about 130 mm, or greater than about 140 mm, or greater than about 148 mm, or greater than about 150 mm, or greater than about 155 mm, or greater than about 160 mm, or greater than about 162 mm, or greater than about 165 mm, or greater than about 168 mm, or greater than about 174 mm, or greater than about 178 mm, or greater than about 180 mm. The minimum tray assembly-treatment vessel gap may be from about 60 mm to about 182 mm, for example, from about 60 mm to about 180 mm, or from about 60 mm to about 178 mm, or from about 60 mm to about 174 mm, or from about 60 mm to about 168 mm, or from about 60 mm to about 165 mm, or from about 60 mm to about 162 mm, or from about 60 mm to about 160 mm, or from about 60 mm to about 155 mm, or from about 60 mm to about 150 mm, or from about 60 mm to about 148 mm, or from about 60 mm to about 140 mm, or from about 60 mm to about 130 mm, or from about 60 mm to about 124 mm, or from about 60 mm to about 118 mm, or from about 60 mm to about 113 mm, or from about 60 mm to about 110 mm, or from about 60 mm to about 107 mm, or from about 60 mm to about 105 mm, or from about 60 mm to about 100 mm, or from about 60 mm to about 90 mm, or from about 60 mm to about 80 mm, or from about 60 mm to about 77 mm, or from about 60 mm to about 75 mm, or from about 60 mm to about 70 mm, or from about 60 mm to about 65 mm, or from about 65 mm to about 182 mm, or from about 65 mm to about 180 mm, or from about 65 mm to about 178 mm, or from about 65 mm to about 174 mm, or from about 65 mm to about 168 mm, or from about 65 mm to about 165 mm, or from about 65 mm to about 162 mm, or from about 65 mm to about 160 mm, or from about 65 mm to about 155 mm, or from about 65 mm to about 150 mm, or from about 65 mm to about 148 mm, or from about 65 mm to about 140 mm, or from about 65 mm to about 130 mm, or from about 65 mm to about 124 mm, or from about 65 mm to about 118 mm, or from about 65 mm to about 113 mm, or from about 65 mm to about 110 mm, or from about 65 mm to about 107 mm, or from about 65 mm to about 105 mm, or from about 65 mm to about 100 mm, or from about 65 mm to about 90 mm, or from about 65 mm to about 80 mm, or from about 65 mm to about 77 mm, or from about 65 mm to about 75 mm, or from about 65 mm to about 70 mm, or from about 70 mm to about 182 mm, or from about 70 mm to about 180 mm, or from about 70 mm to about 178 mm, or from about 70 mm to about 174 mm, or from about 70 mm to about 168 mm, or from about 70 mm to about 165 mm, or from about 70 mm to about 162 mm, or from about 70 mm to about 160 mm, or from about 70 mm to about 155 mm, or from about 70 mm to about 150 mm, or from about 70 mm to about 148 mm, or from about 70 mm to about 140 mm, or from about 70 mm to about 130 mm, or from about 70 mm to about 124 mm, or from about 70 mm to about 118 mm, or from about 70 mm to about 113 mm, or from about 70 mm to about 110 mm, or from about 70 mm to about 107 mm, or from about 70 mm to about 105 mm, or from about 70 mm to about 100 mm, or from about 70 mm to about 90 mm, or from about 70 mm to about 80 mm, or from about 70 mm to about 77 mm, or from about 70 mm to about 75 mm, or from about 75 mm to about 182 mm, or from about 75 mm to about 180 mm, or from about 75 mm to about 178 mm, or from about 75 mm to about 174 mm, or from about 75 mm to about 168 mm, or from about 75 mm to about 165 mm, or from about 75 mm to about 162 mm, or from about 75 mm to about 160 mm, or from about 75 mm to about 155 mm, or from about 75 mm to about 150 mm, or from about 75 mm to about 148 mm, or from about 75 mm to about 140 mm, or from about 75 mm to about 130 mm, or from about 75 mm to about 124 mm, or from about 75 mm to about 118 mm, or from about 75 mm to about 113 mm, or from about 75 mm to about 110 mm, or from about 75 mm to about 107 mm, or from about 75 mm to about 105 mm, or from about 75 mm to about 100 mm, or from about 75 mm to about 90 mm, or from about 75 mm to about 80 mm, or from about 75 mm to about 77 mm, or from about 77 mm to about 182 mm, or from about 77 mm to about 180 mm, or from about 77 mm to about 178 mm, or from about 77 mm to about 174 mm, or from about 77 mm to about 168 mm, or from about 77 mm to about 165 mm, or from about 77 mm to about 162 mm, or from about 77 mm to about 160 mm, or from about 77 mm to about 155 mm, or from about 77 mm to about 150 mm, or from about 77 mm to about 148 mm, or from about 77 mm to about 140 mm, or from about 77 mm to about 130 mm, or from about 77 mm to about 124 mm, or from about 77 mm to about 118 mm, or from about 77 mm to about 113 mm, or from about 77 mm to about 110 mm, or from about 77 mm to about 107 mm, or from about 77 mm to about 105 mm, or from about 77 mm to about 100 mm, or from about 77 mm to about 90 mm, or from about 77 mm to about 80 mm, or from about 80 mm to about 182 mm, or from about 80 mm to about 180 mm, or from about 80 mm to about 178 mm, or from about 80 mm to about 174 mm, or from about 80 mm to about 168 mm, or from about 80 mm to about 165 mm, or from about 80 mm to about 162 mm, or from about 80 mm to about 160 mm, or from about 80 mm to about 155 mm, or from about 80 mm to about 150 mm, or from about 80 mm to about 148 mm, or from about 80 mm to about 140 mm, or from about 80 mm to about 130 mm, or from about 80 mm to about 124 mm, or from about 80 mm to about 118 mm, or from about 80 mm to about 113 mm, or from about 80 mm to about 110 mm, or from about 80 mm to about 107 mm, or from about 80 mm to about 105 mm, or from about 80 mm to about 100 mm, or from about 80 mm to about 90 mm, or from about 90 mm to about 182 mm, or from about 90 mm to about 180 mm, or from about 90 mm to about 178 mm, or from about 90 mm to about 174 mm, or from about 90 mm to about 168 mm, or from about 90 mm to about 165 mm, or from about 90 mm to about 162 mm, or from about 90 mm to about 160 mm, or from about 90 mm to about 155 mm, or from about 90 mm to about 150 mm, or from about 90 mm to about 148 mm, or from about 90 mm to about 140 mm, or from about 90 mm to about 130 mm, or from about 90 mm to about 124 mm, or from about 90 mm to about 118 mm, or from about 90 mm to about 113 mm, or from about 90 mm to about 110 mm, or from about 90 mm to about 107 mm, or from about 90 mm to about 105 mm, or from about 90 mm to about 100 mm, or from about 100 mm to about 182 mm, or from about 100 mm to about 180 mm, or from about 100 mm to about 178 mm, or from about 100 mm to about 174 mm, or from about 100 mm to about 168 mm, or from about 100 mm to about 165 mm, or from about 100 mm to about 162 mm, or from about 100 mm to about 160 mm, or from about 100 mm to about 155 mm, or from about 100 mm to about 150 mm, or from about 100 mm to about 148 mm, or from about 100 mm to about 140 mm, or from about 100 mm to about 130 mm, or from about 100 mm to about 124 mm, or from about 100 mm to about 118 mm, or from about 100 mm to about 113 mm, or from about 100 mm to about 110 mm, or from about 100 mm to about 107 mm, or from about 100 mm to about 105 mm, or from about 105 mm to about 182 mm, or from about 105 mm to about 180 mm, or from about 105 mm to about 178 mm, or from about 105 mm to about 174 mm, or from about 105 mm to about 168 mm, or from about 105 mm to about 165 mm, or from about 105 mm to about 162 mm, or from about 105 mm to about 160 mm, or from about 105 mm to about 155 mm, or from about 105 mm to about 150 mm, or from about 105 mm to about 148 mm, or from about 105 mm to about 140 mm, or from about 105 mm to about 130 mm, or from about 105 mm to about 124 mm, or from about 105 mm to about 118 mm, or from about 105 mm to about 113 mm, or from about 105 mm to about 110 mm, or from about 105 mm to about 107 mm, or from about 107 mm to about 182 mm, or from about 107 mm to about 180 mm, or from about 107 mm to about 178 mm, or from about 107 mm to about 174 mm, or from about 107 mm to about 168 mm, or from about 107 mm to about 165 mm, or from about 107 mm to about 162 mm, or from about 107 mm to about 160 mm, or from about 107 mm to about 155 mm, or from about 107 mm to about 150 mm, or from about 107 mm to about 148 mm, or from about 107 mm to about 140 mm, or from about 107 mm to about 130 mm, or from about 107 mm to about 124 mm, or from about 107 mm to about 118 mm, or from about 107 mm to about 113 mm, or from about 107 mm to about 110 mm, or from about 110 mm to about 182 mm, or from about 110 mm to about 180 mm, or from about 110 mm to about 178 mm, or from about 110 mm to about 174 mm, or from about 110 mm to about 168 mm, or from about 110 mm to about 165 mm, or from about 110 mm to about 162 mm, or from about 110 mm to about 160 mm, or from about 110 mm to about 155 mm, or from about 110 mm to about 150 mm, or from about 110 mm to about 148 mm, or from about 110 mm to about 140 mm, or from about 110 mm to about 130 mm, or from about 110 mm to about 124 mm, or from about 110 mm to about 118 mm, or from about 110 mm to about 113 mm, or from about 113 mm to about 182 mm, or from about 113 mm to about 180 mm, or from about 113 mm to about 178 mm, or from about 113 mm to about 174 mm, or from about 113 mm to about 168 mm, or from about 113 mm to about 165 mm, or from about 113 mm to about 162 mm, or from about 113 mm to about 160 mm, or from about 113 mm to about 155 mm, or from about 113 mm to about 150 mm, or from about 113 mm to about 148 mm, or from about 113 mm to about 140 mm, or from about 113 mm to about 130 mm, or from about 113 mm to about 124 mm, or from about 113 mm to about 118 mm, or from about 118 mm to about 182 mm, or from about 118 mm to about 180 mm, or from about 118 mm to about 178 mm, or from about 118 mm to about 174 mm, or from about 118 mm to about 168 mm, or from about 118 mm to about 165 mm, or from about 118 mm to about 162 mm, or from about 118 mm to about 160 mm, or from about 118 mm to about 155 mm, or from about 118 mm to about 150 mm, or from about 118 mm to about 148 mm, or from about 118 mm to about 140 mm, or from about 118 mm to about 130 mm, or from about 118 mm to about 124 mm, or from about 124 mm to about 182 mm, or from about 124 mm to about 180 mm, or from about 124 mm to about 178 mm, or from about 124 mm to about 174 mm, or from about 124 mm to about 168 mm, or from about 124 mm to about 165 mm, or from about 124 mm to about 162 mm, or from about 124 mm to about 160 mm, or from about 124 mm to about 155 mm, or from about 124 mm to about 150 mm, or from about 124 mm to about 148 mm, or from about 124 mm to about 140 mm, or from about 124 mm to about 130 mm, or from about 130 mm to about 182 mm, or from about 130 mm to about 180 mm, or from about 130 mm to about 178 mm, or from about 130 mm to about 174 mm, or from about 130 mm to about 168 mm, or from about 130 mm to about 165 mm, or from about 130 mm to about 162 mm, or from about 130 mm to about 160 mm, or from about 130 mm to about 155 mm, or from about 130 mm to about 150 mm, or from about 130 mm to about 148 mm, or from about 130 mm to about 140 mm, or from about 140 mm to about 182 mm, or from about 140 mm to about 180 mm, or from about 140 mm to about 178 mm, or from about 140 mm to about 174 mm, or from about 140 mm to about 168 mm, or from about 140 mm to about 165 mm, or from about 140 mm to about 162 mm, or from about 140 mm to about 160 mm, or from about 140 mm to about 155 mm, or from about 140 mm to about 150 mm, or from about 140 mm to about 148 mm, or from about 148 mm to about 182 mm, or from about 148 mm to about 180 mm, or from about 148 mm to about 178 mm, or from about 148 mm to about 174 mm, or from about 148 mm to about 168 mm, or from about 148 mm to about 165 mm, or from about 148 mm to about 162 mm, or from about 148 mm to about 160 mm, or from about 148 mm to about 155 mm, or from about 148 mm to about 150 mm, or from about 150 mm to about 182 mm, or from about 150 mm to about 180 mm, or from about 150 mm to about 178 mm, or from about 150 mm to about 174 mm, or from about 150 mm to about 168 mm, or from about 150 mm to about 165 mm, or from about 150 mm to about 162 mm, or from about 150 mm to about 160 mm, or from about 150 mm to about 155 mm, or from about 155 mm to about 182 mm, or from about 155 mm to about 180 mm, or from about 155 mm to about 178 mm, or from about 155 mm to about 174 mm, or from about 155 mm to about 168 mm, or from about 155 mm to about 165 mm, or from about 155 mm to about 162 mm, or from about 155 mm to about 160 mm, or from about 160 mm to about 182 mm, or from about 160 mm to about 180 mm, or from about 160 mm to about 178 mm, or from about 160 mm to about 174 mm, or from about 160 mm to about 168 mm, or from about 160 mm to about 165 mm, or from about 160 mm to about 162 mm, or from about 162 mm to about 182 mm, or from about 162 mm to about 180 mm, or from about 162 mm to about 178 mm, or from about 162 mm to about 174 mm, or from about 162 mm to about 168 mm, or from about 162 mm to about 165 mm, or from about 165 mm to about 182 mm, or from about 165 mm to about 180 mm, or from about 165 mm to about 178 mm, or from about 165 mm to about 174 mm, or from about 165 mm to about 168 mm, or from about 168 mm to about 182 mm, or from about 168 mm to about 180 mm, or from about 168 mm to about 178 mm, or from about 168 mm to about 174 mm, or from about 174 mm to about 182 mm, or from about 174 mm to about 180 mm, or from about 174 mm to about 178 mm, or from about 178 mm to about 182 mm, or from about 178 mm to about 180 mm, or from about 180 mm to about 182 mm.

Providing a minimum tray assembly-treatment vessel gap that is less than 60 mm has been found to increase blockage risk due to particle build-up. Providing a minimum tray assembly-treatment vessel gap that is greater than 182 mm has been found to reduce the proportion of solids exiting the lowermost tray unit of the tray assembly that enter the sump.

A minimum gap may exist between the tray units of the tray assembly. The minimum gap between the tray units of the tray assembly may be: less than 87 mm; or less than 86 mm; or less than 83 mm; or less than 80 mm; or less than 77 mm; or less than 75 mm; or less than 70 mm; or less than 68 mm; or less than 67 mm; or less than 65 mm; or less than 63 mm; or less than 61 mm; or less than 59 mm; or less than 50 mm.

The minimum gap between the tray units of the tray assembly may be referred to as the minimum inter-tray gap. The minimum inter-tray gap may be less than about 87 mm, for example, less than about 86 mm, or less than about 83 mm, or less than about 80 mm, or less than about 77 mm, or less than about 75 mm, or less than about 70 mm, or less than about 68 mm, or less than about 67 mm, or less than about 65 mm, or less than about 63 mm, or less than about 61 mm, or less than about 59 mm, or less than about 50 mm. The minimum inter-tray gap may be greater than about 40 mm, for example, greater than about 50 mm, or greater than about 59 mm, or greater than about 61 mm, or greater than about 63 mm, or greater than about 65 mm, or greater than about 67 mm, or greater than about 68 mm, or greater than about 70 mm, or greater than about 75 mm, or greater than about 77 mm, or greater than about 80 mm, or greater than about 83 mm, or greater than about 86 mm. The minimum inter-tray gap may be from about 40 mm to about 87 mm, for example, from about 40 mm to about 86 mm, or from about 40 mm to about 83 mm, or from about 40 mm to about 80 mm, or from about 40 mm to about 77 mm, or from about 40 mm to about 75 mm, or from about 40 mm to about 70 mm, or from about 40 mm to about 68 mm, or from about 40 mm to about 67 mm, or from about 40 mm to about 65 mm, or from about 40 mm to about 63 mm, or from about 40 mm to about 61 mm, or from about 40 mm to about 59 mm, or from about 40 mm to about 50 mm, or from about 50 mm to about 87 mm, or from about 50 mm to about 86 mm, or from about 50 mm to about 83 mm, or from about 50 mm to about 80 mm, or from about 50 mm to about 77 mm, or from about 50 mm to about 75 mm, or from about 50 mm to about 70 mm, or from about 50 mm to about 68 mm, or from about 50 mm to about 67 mm, or from about 50 mm to about 65 mm, or from about 50 mm to about 63 mm, or from about 50 mm to about 61 mm, or from about 50 mm to about 59 mm, or from about 59 mm to about 87 mm, or from about 59 mm to about 86 mm, or from about 59 mm to about 83 mm, or from about 59 mm to about 80 mm, or from about 59 mm to about 77 mm, or from about 59 mm to about 75 mm, or from about 59 mm to about 70 mm, or from about 59 mm to about 68 mm, or from about 59 mm to about 67 mm, or from about 59 mm to about 65 mm, or from about 59 mm to about 63 mm, or from about 59 mm to about 61 mm, or from about 61 mm to about 87 mm, or from about 61 mm to about 86 mm, or from about 61 mm to about 83 mm, or from about 61 mm to about 80 mm, or from about 61 mm to about 77 mm, or from about 61 mm to about 75 mm, or from about 61 mm to about 70 mm, or from about 61 mm to about 68 mm, or from about 61 mm to about 67 mm, or from about 61 mm to about 65 mm, or from about 61 mm to about 63 mm, or from about 63 mm to about 87 mm, or from about 63 mm to about 86 mm, or from about 63 mm to about 83 mm, or from about 63 mm to about 80 mm, or from about 63 mm to about 77 mm, or from about 63 mm to about 75 mm, or from about 63 mm to about 70 mm, or from about 63 mm to about 68 mm, or from about 63 mm to about 67 mm, or from about 63 mm to about 65 mm, or from about 65 mm to about 87 mm, or from about 65 mm to about 86 mm, or from about 65 mm to about 83 mm, or from about 65 mm to about 80 mm, or from about 65 mm to about 77 mm, or from about 65 mm to about 75 mm, or from about 65 mm to about 70 mm, or from about 65 mm to about 68 mm, or from about 65 mm to about 67 mm, or from about 67 mm to about 87 mm, or from about 67 mm to about 86 mm, or from about 67 mm to about 83 mm, or from about 67 mm to about 80 mm, or from about 67 mm to about 77 mm, or from about 67 mm to about 75 mm, or from about 67 mm to about 70 mm, or from about 67 mm to about 68 mm, or from about 68 mm to about 87 mm, or from about 68 mm to about 86 mm, or from about 68 mm to about 83 mm, or from about 68 mm to about 80 mm, or from about 68 mm to about 77 mm, or from about 68 mm to about 75 mm, or from about 68 mm to about 70 mm, or from about 70 mm to about 87 mm, or from about 70 mm to about 86 mm, or from about 70 mm to about 83 mm, or from about 70 mm to about 80 mm, or from about 70 mm to about 77 mm, or from about 70 mm to about 75 mm, or from about 75 mm to about 87 mm, or from about 75 mm to about 86 mm, or from about 75 mm to about 83 mm, or from about 75 mm to about 80 mm, or from about 75 mm to about 77 mm, or from about 77 mm to about 87 mm, or from about 77 mm to about 86 mm, or from about 77 mm to about 83 mm, or from about 77 mm to about 80 mm, or from about 80 mm to about 87 mm, or from about 80 mm to about 86 mm, or from about 80 mm to about 83 mm, or from about 77 mm to about 80 mm, or from about 83 mm to about 87 mm, or from about 83 mm to about 86 mm, or from about 86 mm to about 87 mm.

Providing a minimum inter-tray gap that is less than 40 mm has been found to increase blockage risk. Providing a minimum inter-tray gap that is greater than 87 mm has been found to increase the proportion of solids exiting the tray assembly in a sideways direction (i.e. not towards the sump).

A ratio of an area of the outlet opening to an area bounded by the cross-sectional profile of the settling portion on the first plane may be less than 0.07, for example, less than 0.06, or less than 0.055, or less than 0.05, or less than 0.045, or less than 0.04, or less than 0.035, or less than 0.03, or less than 0.025, or less than 0.02, or less than 0.015, or less than 0.01 A ratio of an area of the outlet opening to an area bounded by the cross-sectional profile of the settling portion on the first plane may be greater than 0.005, for example, greater than 0.01, or greater than 0.015, or greater than 0.02, or greater than 0.025, or greater than 0.03, or greater than 0.035, or greater than 0.04, or greater than 0.045, or greater than 0.05, or greater than about 0.055, or greater than 0.06.

The ratio of the area of the outlet opening to the area bounded by the cross-sectional profile of the settling portion on the first plane may be referred to as the outlet area ratio *r_{A}.* The outlet area ratio *r_{A}* may be less than about 0.07, for example, less than about 0.06, or less than about 0.055, or less than about 0.05, or less than about 0.045, or less than about 0.04, or less than about 0.035, or less than about 0.03, or less than about 0.025, or less than about 0.02, or less than about 0.015, or less than about 0.01. The outlet area ratio *r_{A}* may be greater than about 0.005, for example, greater than about 0.01, or greater than about 0.015, or greater than about 0.02, or greater than about 0.025, or greater than about 0.03, or greater than about 0.035, or greater than about 0.04, or greater than about 0.045, or greater than about 0.05, or greater than about 0.055, or greater than about 0.06. The outlet area ratio *r_{A}* may be from about 0.005 to about 0.07, for example, from about 0.005 to about 0.06, or from about 0.005 to about 0.055, or from about 0.005 to about 0.05, or from about 0.005 to about 0.045, or from about 0.005 to about 0.04, or from about 0.005 to about 0.035, or from about 0.005 to about 0.03, or from about 0.005 to about 0.025, or from about 0.005 to about 0.02, or from about 0.005 to about 0.015, or from about 0.005 to about 0.01, or from about 0.01 to about 0.07, or from about 0.01 to about 0.06, or from about 0.01 to about 0.055, or from about 0.01 to about 0.05, or from about 0.01 to about 0.045, or from about 0.01 to about 0.04, or from about 0.01 to about 0.035, or from about 0.01 to about 0.03, or from about 0.01 to about 0.025, or from about 0.01 to about 0.02, or from about 0.01 to about 0.015, or from about 0.015 to about 0.07, or from about 0.015 to about 0.06, or from about 0.015 to about 0.055, or from about 0.015 to about 0.05, or from about 0.015 to about 0.045, or from about 0.015 to about 0.04, or from about 0.015 to about 0.035, or from about 0.015 to about 0.03, or from about 0.015 to about 0.025, or from about 0.015 to about 0.02, or from about 0.02 to about 0.07, or from about 0.02 to about 0.06, or from about 0.02 to about 0.055, or from about 0.02 to about 0.05, or from about 0.02 to about 0.045, or from about 0.02 to about 0.04, or from about 0.02 to about 0.035, or from about 0.02 to about 0.03, or from about 0.02 to about 0.025, or from about 0.025 to about 0.07, or from about 0.025 to about 0.06, or from about 0.025 to about 0.055, or from about 0.025 to about 0.05, or from about 0.025 to about 0.045, or from about 0.025 to about 0.04, or from about 0.025 to about 0.035, or from about 0.025 to about 0.03, or from about 0.03 to about 0.07, or from about 0.03 to about 0.06, or from about 0.03 to about 0.055, or from about 0.03 to about 0.05, or from about 0.03 to about 0.045, or from about 0.03 to about 0.04, or from about 0.03 to about 0.035, or from about 0.035 to about 0.07, or from about 0.035 to about 0.06, or from about 0.035 to about 0.055, or from about 0.035 to about 0.05, or from about 0.035 to about 0.045, or from about 0.035 to about 0.04, or from about 0.04 to about 0.07, or from about 0.04 to about 0.06, or from about 0.04 to about 0.055, or from about 0.04 to about 0.05, or from about 0.04 to about 0.045, or from about 0.045 to about 0.07, or from about 0.045 to about 0.06, or from about 0.045 to about 0.055, or from about 0.045 to about 0.05, or from about 0.05 to about 0.07, or from about 0.05 to about 0.06, or from about 0.05 to about 0.055, or from about 0.055 to about 0.07, or from about 0.055 to about 0.06, or from about 0.06 to about 0.07.

Providing an outlet area ratio *r_{A}* that is less than 0.005 has been found to increase blockage risk and reduce the relative size of the outlet opening to the extent that the downward passage of settled solids through the outlet openings is reduced, thereby reducing the underflow collection efficiency *η_{underflow}* or the total collection efficiency *ηₜₒₜₐₗ* of the separator. Providing an outlet area ratio *r_{A}* that is greater than about 0.07 has been found to result in insufficient spacing between adjacent tray units of the tray assembly, which can lead to blockages in the tray assembly.

In some examples, it may be that: the offset ratio *rₒ* is greater than 0.002 and less than 0.3; and the concavity ratio *r_{c}* is less than 0.498 and greater than 0.1. In some examples, it may be that: the offset ratio *rₒ* is greater than 0.002 and less than 0.3; the concavity ratio *r_{c}* is less than 0.498 and greater than 0.1; and the outlet area ratio *r_{A}* is less than 0.07 and greater than 0.005. In some examples, it may be that: the offset ratio *rₒ* is greater than 0.002 and less than 0.3; the concavity ratio *r_{c}* is less than 0.498 and greater than 0.1; the outlet area ratio *r_{A}* is less than 0.07 and greater than 0.005; and the minimum tray assembly-treatment vessel gap is less than 182 mm and greater than 60 mm. In some examples, it may be that: the offset ratio *rₒ* is greater than 0.002 and less than 0.3; the concavity ratio *r_{c}* is less than 0.498 and greater than 0.1; the outlet area ratio *r_{A}* is less than 0.07 and greater than 0.005; the minimum tray assembly-treatment vessel gap is less than 182 mm and greater than 60 mm; and the minimum inter-tray gap is less than 87 mm and greater than 40 mm.

In some examples, it may be that: the offset ratio *rₒ* is greater than 0.002; and the concavity ratio *r_{c}* is less than 0.498. In some examples, it may be that: the offset ratio *rₒ* is greater than 0.002; the concavity ratio *r_{c}* is less than 0.498; and the outlet area ratio *r_{A}* is less than 0.07. In some examples, it may be that: the offset ratio *rₒ* is greater than 0.002; the concavity ratio *r_{c}* is less than 0.498; the outlet area ratio *r_{A}* is less than 0.07; and the minimum tray assembly-treatment vessel gap is less than 182 mm. In some examples, it may be that: the offset ratio *rₒ* is greater than 0.002; the concavity ratio *r_{c}* is less than 0.498; the outlet area ratio *r_{A}* is less than 0.07; the minimum tray assembly-treatment vessel gap is less than 182 mm; and the minimum inter-tray gap is less than 87 mm.

In some examples, it may be that: the offset ratio *rₒ* is less than 0.3; and the concavity ratio *r_{c}* is greater than 0.1. In some examples, it may be that: the offset ratio *rₒ* is less than 0.3; the concavity ratio *r_{c}* is greater than 0.1; and the outlet area ratio *r_{A}* is greater than 0.005. In some examples, it may be that: the offset ratio *rₒ* is less than 0.3; the concavity ratio *r_{c}* is greater than 0.1; the outlet area ratio *r_{A}* is greater than 0.005; and the minimum tray assembly-treatment vessel gap is greater than 60 mm. In some examples, it may be that: the offset ratio *rₒ* is less than 0.3; the concavity ratio *r_{c}* is greater than 0.1; the outlet area ratio *r_{A}* is greater than 0.005; the minimum tray assembly-treatment vessel gap is greater than 60 mm; and the minimum inter-tray gap is greater than 40 mm.

In some examples, it may be that: the offset ratio *rₒ* is greater than 0.03 and less than 0.2; and the concavity ratio *r_{c}* is less than 0.35 and greater than 0.185. In some examples, it may be that: the offset ratio *rₒ* is greater than 0.03 and less than 0.2; the concavity ratio *r_{c}* is less than 0.35 and greater than 0.185; the outlet area ratio *r_{A}* is less than 0.04 and greater than 0.005. In some examples, it may be that: the offset ratio *rₒ* is greater than 0.03 and less than 0.2; the concavity ratio *r_{c}* is less than 0.35 and greater than 0.185; the outlet area ratio *r_{A}* is less than 0.04 and greater than 0.005; the minimum tray assembly-treatment vessel gap is less than 155 mm and greater than 65 mm. In some examples, it may be that: the offset ratio *rₒ* is greater than 0.03 and less than 0.2; the concavity ratio *r_{c}* is less than 0.35 and greater than 0.185; the outlet area ratio *r_{A}* is less than 0.04 and greater than 0.005; the minimum tray assembly-treatment vessel gap is less than 155 mm and greater than 65 mm; and the minimum inter-tray gap is less than 75 mm and greater than 50 mm.

In some examples, it may be that: the offset ratio *rₒ* is greater than 0.03; and the concavity ratio *r_{c}* is less than 0.35. In some examples, it may be that: the offset ratio *rₒ* is greater than 0.03; the concavity ratio *r_{c}* is less than 0.35; the outlet area ratio *r_{A}* is less than 0.04. In some examples, it may be that: the offset ratio *rₒ* is greater than 0.03; the concavity ratio *r_{c}* is less than 0.35; the outlet area ratio *r_{A}* is less than 0.04; the minimum tray assembly-treatment vessel gap is less than 155 mm. In some examples, it may be that: the offset ratio *rₒ* is greater than 0.03; the concavity ratio *r_{c}* is less than 0.35; the outlet area ratio *r_{A}* is less than 0.04; the minimum tray assembly-treatment vessel gap is less than 155 mm; and the minimum inter-tray gap is less than 75 mm.

In some examples, it may be that: the offset ratio *rₒ* is less than 0.2; and the concavity ratio *r_{c}* is greater than 0.185. In some examples, it may be that: the offset ratio *rₒ* is less than 0.2; the concavity ratio *r_{c}* is greater than 0.185; the outlet area ratio *r_{A}* is greater than 0.005. In some examples, it may be that: the offset ratio *rₒ* is less than 0.2; the concavity ratio *r_{c}* is greater than 0.185; the outlet area ratio *r_{A}* is greater than 0.005; the minimum tray assembly-treatment vessel gap is greater than 65 mm. In some examples, it may be that: the offset ratio *rₒ* is less than 0.2; the concavity ratio *r_{c}* is greater than 0.185; the outlet area ratio *r_{A}* is greater than 0.005; the minimum tray assembly-treatment vessel gap is greater than 65 mm; and the minimum inter-tray gap is greater than 50 mm.

In some examples, it may be that: the offset ratio *rₒ* is greater than 0.16 and less than 0.16; and the concavity ratio *r_{c}* is less than 0.307 and greater than 0.285. In some examples, it may be that: the offset ratio *rₒ* is greater than 0.16 and less than 0.16; the concavity ratio *r_{c}* is less than 0.307 and greater than 0.285; and the outlet area ratio *r_{A}* is less than 0.015 and greater than 0.01. In some examples, it may be that: the offset ratio *rₒ* is greater than 0.16 and less than 0.16; the concavity ratio *r_{c}* is less than 0.307 and greater than 0.285; the outlet area ratio *r_{A}* is less than 0.015 and greater than 0.01; and the minimum tray assembly-treatment vessel gap is less than 80 mm and greater than 75 mm. In some examples, it may be that: the offset ratio *rₒ* is greater than 0.16 and less than 0.16; the concavity ratio *r_{c}* is less than 0.307 and greater than 0.285; the outlet area ratio *r_{A}* is less than 0.015 and greater than 0.01; the minimum tray assembly-treatment vessel gap is less than 80 mm and greater than 75 mm; and the minimum inter-tray gap is less than 65 mm and greater than 59 mm.

In some examples, it may be that: the offset ratio *rₒ* is greater than 0.16; and the concavity ratio *r_{c}* is less than 0.307. In some examples, it may be that: the offset ratio *rₒ* is greater than 0.16; the concavity ratio *r_{c}* is less than 0.307; and the outlet area ratio *r_{A}* is less than 0.015. In some examples, it may be that: the offset ratio *rₒ* is greater than 0.16; the concavity ratio *r_{c}* is less than 0.307; the outlet area ratio *r_{A}* is less than 0.015; and the minimum tray assembly-treatment vessel gap is less than 80 mm. In some examples, it may be that: the offset ratio *rₒ* is greater than 0.16; the concavity ratio *r_{c}* is less than 0.307; the outlet area ratio *r_{A}* is less than 0.015; the minimum tray assembly-treatment vessel gap is less than 80 mm; and the minimum inter-tray gap is less than 65 mm.

In some examples, it may be that: the offset ratio *rₒ* is less than 0.16; and the concavity ratio *r_{c}* is greater than 0.285. In some examples, it may be that: the offset ratio *rₒ* is less than 0.16; the concavity ratio *r_{c}* is greater than 0.285; and the outlet area ratio *r_{A}* is greater than 0.01. In some examples, it may be that: the offset ratio *rₒ* is less than 0.16; the concavity ratio *r_{c}* is greater than 0.285; the outlet area ratio *r_{A}* is greater than 0.01; and the minimum tray assembly-treatment vessel gap is greater than 75 mm. In some examples, it may be that: the offset ratio *rₒ* is less than 0.16; the concavity ratio *r_{c}* is greater than 0.285; the outlet area ratio *r_{A}* is greater than 0.01; the minimum tray assembly-treatment vessel gap is greater than 75 mm; and the minimum inter-tray gap is greater than 59 mm.

There may be provided a tray unit as described as stated in any preceding statement.

### List of figures

For a better understanding of the present invention, and to show more clearly how it may be carried into effect, reference will now be made, by way of example, to the accompanying drawings, in which:
Figure 1 is a perspective sectional view of a baseline separator comprising a baseline separator tray assembly disposed within a treatment vessel;
Figure 2A is a schematic cross-sectional side view of a baseline tray unit of the baseline tray assembly in isolation, taken across a first vertical viewing plane that is coplanar with a separator axis of the baseline separator;
Figure 2B is a schematic cross-sectional plan view of the baseline tray unit of Figure 2A;
Figure 3A is a further schematic cross-sectional side view of the baseline tray unit of Figure 2A;
Figure 3B is a further schematic cross-sectional plan view of the baseline tray unit of Figure 2A;
Figure 4 is a further schematic cross-sectional plan view of the baseline tray unit of Figure 2A;
Figure 5 is a schematic cross-sectional side view of the separator taken across a second vertical viewing plane that is angled 90 degrees from the first vertical viewing plane of Figure 2A;
Figure 6 is a schematic cross-sectional close-up side view of the baseline separator;
Figure 7 is a schematic cross-sectional side view of the baseline separator taken across the first vertical viewing plane;
Figure 8 is a schematic cross-sectional side view of a first separator;
Figure 9A is a schematic cross-sectional side view of a first tray unit of the first separator;
Figure 9B is a schematic cross-sectional plan view of the first tray unit of Figure 9A;
Figure 10 is a further schematic cross-sectional plan view of the first tray unit of Figure 9A;
Figure 11 is a schematic cross-sectional side view of a second separator;
Figure 12A is a schematic cross-sectional side view of a second tray unit of the second separator;
Figure 12B is a schematic cross-sectional plan view of the second tray unit of Figure 12A;
Figure 13 is a further schematic cross-sectional plan view of the second tray unit of Figure 12A;
Figure 14 is a schematic cross-sectional side view of a third separator;
Figure 15A is a schematic cross-sectional side view of a third tray unit of the third separator;
Figure 15B is a schematic cross-sectional plan view of the third tray unit of Figure 15A;
Figure 16 is a further schematic cross-sectional plan view of the third tray unit of Figure 15A;
Figure 17 is a line graph showing the effect of a tray loading rate on an underflow collection efficiency of the baseline separator, the first separator, the second separator and the third separator; and
Figure 18 is a line graph showing the effect of a tray loading rate on a total collection efficiency of the baseline separator, the first separator, the second separator and the third separator.

### Detailed description

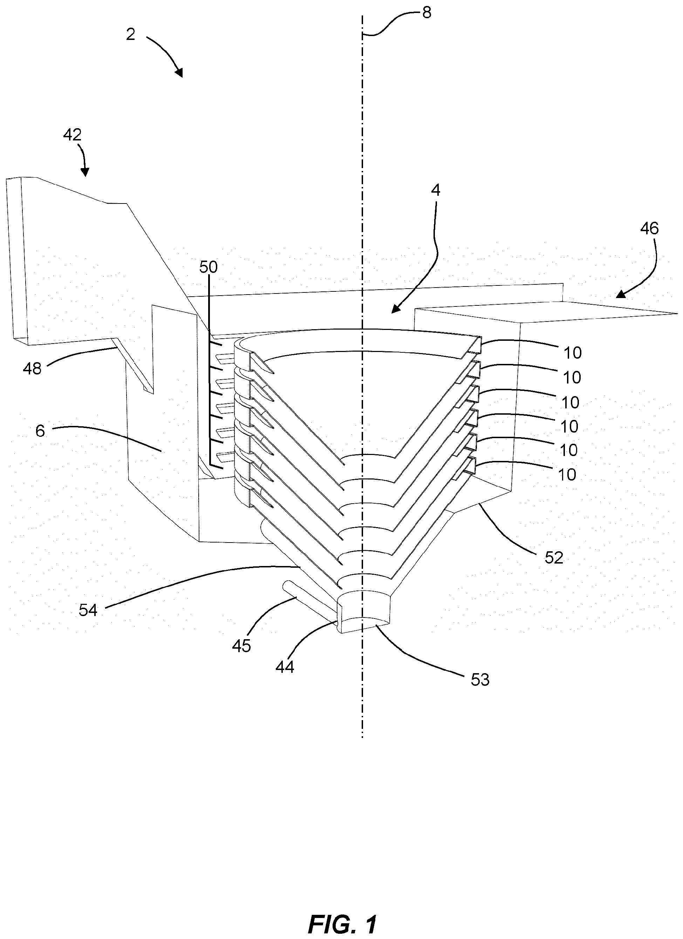

**Figure 1** is a perspective view of a baseline separator 2 comprising a tray assembly 4 disposed within a treatment vessel 6. The components of the baseline separator 2 are referred to herein as baseline components. The baseline treatment vessel 6 may be formed of concrete. The baseline separator 2 may be part of a wastewater treatment installation, and its function may be to separate grit and similar particles from a flow of solid-liquid mixture (e.g. wastewater) prior to further treatment processes. The separator 2 has a separator axis 8, which is preferably substantially vertical. The tray assembly 4 comprises a plurality of nested baseline tray units 10. The tray units 10 are identical to each other. Six tray units 10 are shown in Figure 1, but it will be appreciated that the tray assembly 4 could comprise more or fewer tray units 10. The nested tray units 10 are disposed along the separator axis 8 and are spaced apart from each other along the separator axis 8.

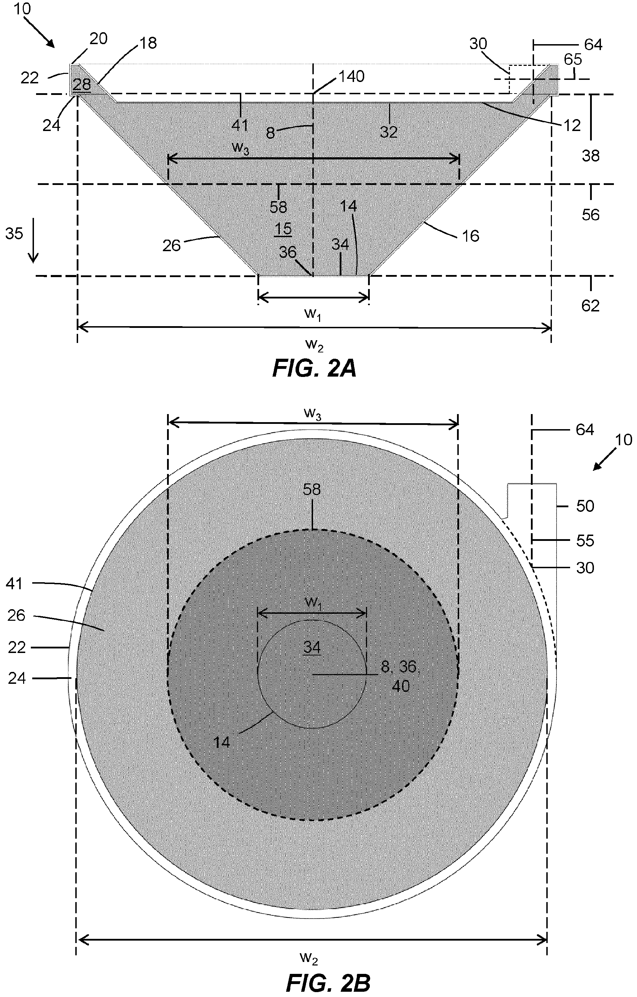

**Figure 2A** is a schematic cross-sectional side view of one of the tray units 10 in isolation taken across a first vertical viewing plane that is coplanar with the separator axis 8. The tray unit 10 comprises an overflow edge 12, an outlet edge 14 and a surface 16 that extends between the overflow edge 12 and the outlet edge 14. The overflow edge 12 defines an overflow opening 32. The overflow edge 12 and the overflow opening 32 are planar. The overflow edge 12 and the overflow opening 32 lie on a plane that is perpendicular to the separator axis 8. The overflow edge 12, and, thus, the overflow opening 32, are circular, although in other arrangements they may have another profile, for example an elliptical profile. The outlet edge 14 defines an outlet opening 34. The outlet opening 34 has a maximum width w₁ and an area *Σ_{lower}*. The outlet opening 34 has a centroid 36 through which the separator axis 8 extends.

The surface 16 defines an internal volume 15 of the tray unit 10. The cross-section of the internal volume 15 is shaded in Figure 2A, for ease of reference. The surface 16 is formed of multiple sections including a lip portion 18, an upper horizontal portion 20, an outer portion 22, a lower horizontal portion 24 and a settling portion 26. In alternative arrangements, one or more of the lip portion 18, the upper horizontal portion 20, the outer portion 22 and the lower horizontal portion 24 may be dispensed with or have different geometries. The multiple sections of the surface 16 may be separately manufactured and assembled together or be integrally formed with each other (e.g. when the tray unit 10 is a plastics moulding).

The lip portion 18, the upper horizontal portion 20, the outer portion 22, the lower horizontal portion 24 and the settling portion 26 extend around the separator axis 8. The lip portion 18, the upper horizontal portion 20, the outer portion 22, the lower horizontal portion 24 and the settling portion 26 are axisymmetric around the separator axis 8. The lip portion 18 defines the overflow edge 12. The upper horizontal portion 20, the outer portion 22 and the lower horizontal portion 24 define an annular channel 28. The outer portion 22 defines an inlet opening 30. The annular channel 28 forms part of the internal volume 15 of the tray unit 10. The settling portion 26 and the lip portion 18 are frustoconical. The lip portion 18 of the surface 16 faces away from the separator axis 8. The lip portion 18 is inclined so as to be parallel to the settling portion 26, however in alternative arrangements this need not be the case. The upper horizontal portion 20 and the lower horizontal portion 24 are planar and extend perpendicularly with respect to the separator axis 8. The gradient of the surface 16 changes at a single line between the settling portion 26 and the lower horizontal portion 24 such that an edge is formed between the settling portion 26 and the lower horizontal portion 24. The outer portion 22 is cylindrical and has a central axis that coincides with the separator axis 8. The lip portion 18 and the upper horizontal portion 20 extend radially inwardly from the outer portion 22.

The settling portion 26 faces the separator axis 8. That is, the settling portion 26 is not orthogonal with respect to the separator axis 8 and does not face away from the separator axis 8 . The settling portion 26 tapers inwardly toward the separator axis 8 in a direction 35 toward the outlet edge 14. Accordingly, the cross-sectional area bounded by the settling portion 26 and defined perpendicular to the separator axis 8 decreases along the settling portion 26 from the lower horizontal portion 24 to the outlet 34. The cross-sectional area bounded by the settling portion 26 and defined perpendicular to the separator axis 8 is at a maximum on a first plane 38 of the tray unit 10. That is, the cross-sectional area bounded by the settling portion 26 and measured perpendicular to the separator axis 8 is smaller at all other points along the separator axis 8. The first plane 38 is disposed at the interface between the settling portion 26 and the lower horizontal portion 24, however it will be appreciated that in other embodiments this may not be the case. The tray unit 10 further comprises a second plane 56 that extends perpendicular to the separator axis 8 and is equidistant from the first plane 38 and the centroid 36 of the outlet opening 34. The tray unit 10 further comprises a third plane 62 on which the centroid 36 and the outlet edge 14 lie. The third plane 56 extends perpendicular to the separator axis 8. The first, second and third planes 38, 56, 62 are parallel to each other.

Returning to Figure 1, the treatment vessel 6 is provided with an inlet chute 42, a grit outlet 44 and a fluids outlet 46. The inlet chute 42 has a single manifold passageway 48 and a plurality of inlet passageways 50. The inlet chute 42 extends into the treatment vessel 6 through an outer wall of the treatment vessel 6 and is in direct communication with the tray assembly 4. The mid-portion of the inlet chute 42 is inclined in a downward direction from the manifold passageway 48 to the inlet passageways 50. The inlet passageways 50 extend from the lower end of the mid-portion of the inlet chute 42 and are each in direct communication with a respective tray unit 10 via the respective inlet openings 30 of the tray units 10. The inlet passageways 50 and the inlet openings 30 are arranged tangentially with respect to the separator axis 8.

A base of the treatment vessel 6 comprises an outer funnel section 52, a recess 54 (also referred to as an inner funnel section) and a sump 53. The outer funnel section 52, the inner funnel section 54 and the sump 53 extend horizontally across the extent of the treatment vessel 6. The outer funnel section 52 and the inner funnel section 54 converge in a downward direction. The lowermost tray unit 10 is partially disposed within a space formed by the inner funnel section 54. The inner funnel section 54 is frustoconical and profiled such that a substantially constant clearance is maintained between the inner funnel section 54 and the lowermost tray unit 10. The outer funnel section 52 is less steeply inclined than the inner funnel section 54. The sump 53 is provided in the lower region of the inner funnel section 54 and such that the inner funnel section 54 opens into the sump 53. The outer funnel section 52, the inner funnel section 54 and the sump 53 are arranged coaxially with the separator axis 8. The grit outlet 44 is an outlet from the sump 53, and, thus, the treatment vessel 6. The grit outlet 44 is connected to an exterior of the separator 2 via an outlet pipe 45. In some arrangements, the outlet pipe 45 may extend radially outward from the grit outlet 44. In some arrangements, the outlet pipe 45 may be fluidically connected to a pump (not shown) that assists in the removal of solids from the sump 53.

**Figure 2B** is a schematic cross-sectional plan view of the tray unit 10 of Figure 2A taken above the first plane 38. For clarity, the overflow edge 12 and the lip portion 18 are not shown in Figure 2B. As shown, the outlet edge 14, and, thus, the outlet opening 34, are circular, although in other arrangements they may have another profile, for example an elliptical profile. A cross-sectional profile 41 of the settling portion 26 on the first plane 38 is shown in light and dark shading in Figure 2B. An area *Σᵤₚₚₑᵣ* is bounded by the cross-sectional profile 41 of the settling portion 26 on the first plane 38. The cross-sectional profile 41 has a maximum width w₂. A centroid 40 of the cross-sectional profile 41 is aligned with the separator axis 8. A cross-sectional profile 58 of the settling portion 26 on the second plane 56 is shown in dark shading in Figure 2B. The cross-sectional profile 58 has a maximum width w₃. A centreline 55 of the inlet passageway 50 is disposed on an inlet plane 64 that is parallel to the separator axis 8 and perpendicular to the first plane 38. The centreline 55 of the inlet passageway 50 is also disposed on a plane 65 that is perpendicular to the separator axis 8 (i.e. a horizontal plane) and parallel to the first plane 38.

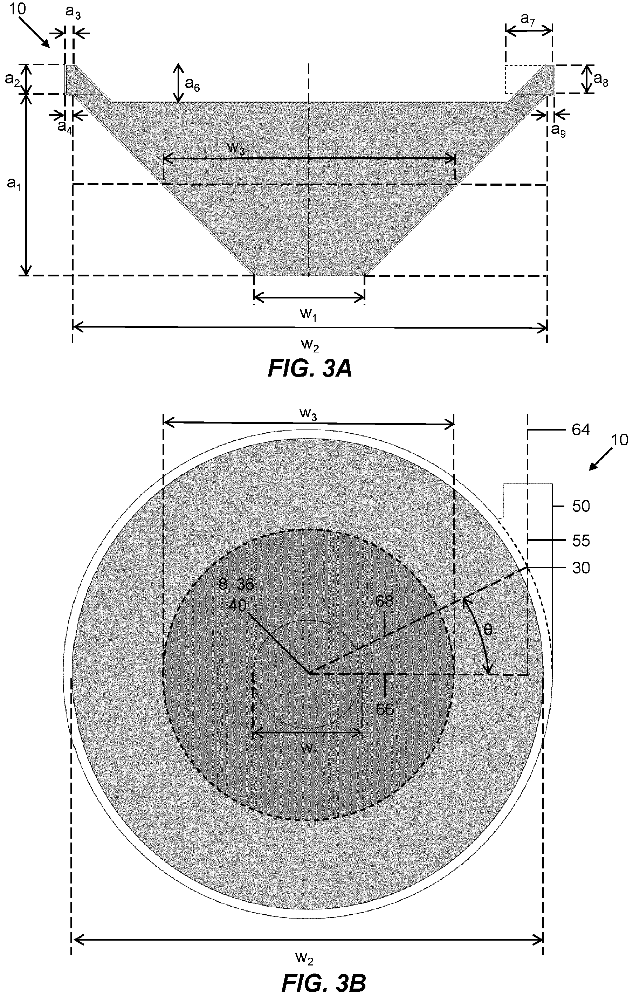

**Figure 3A** is a further schematic cross-sectional side view of the first tray unit 10 annotated with the location of a number of baseline dimensions (including w₁, w₂ and w₃ referred to previously). The dimension a₁ is the height of the settling portion 26 (i.e. its length measured in a direction parallel to the separator axis 8). The dimension a₂ is the height of the outer portion 22. The dimension a₃ is the radial width of the upper horizontal portion 20. The dimensions a₄ and a₉ are the radial width of the lower horizontal portion 24. The dimension a₆ is the height of the lip portion 18. The dimension a₇ is the width of the inlet opening 30. The dimension a₈ is the height of the inlet opening 30.

**Figure 3B** is a further schematic cross-sectional plan view of the baseline tray unit 10 that has been annotated in a similar manner. As mentioned above, the centreline 55 of the inlet passageway 50 is disposed on an inlet plane 64 that is parallel to the separator axis 8 and perpendicular to the first plane 38. A further plane 66 is shown in Figure 3B on which the separator axis 8 lies that is perpendicular to the inlet plane 64. A further plane 68 is also shown in Figure 3B on which the separator axis 8 lies and which extends through the centre of the inlet opening 30. An angle θ between the further planes 66, 68 is centred on the separator axis 8.

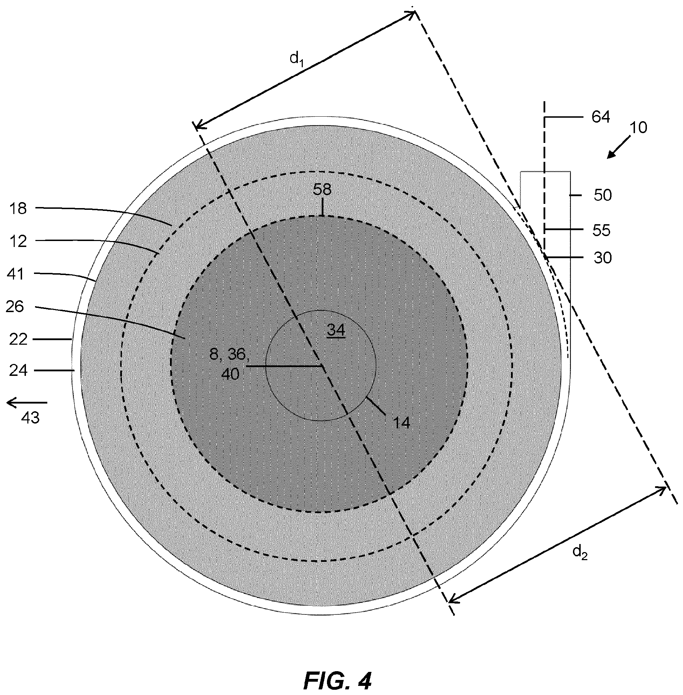

**Figure 4** is a further schematic cross-sectional plan view of the first tray unit 10. The view of Figure 4 generally corresponds to the view of Figure 3B but has been marked-up to indicate additional features of the first tray unit 10. The overflow edge 12 that defines the overflow opening 32 is shown in phantom in Figure 4. As shown, the radial extent of the lip portion 18 is constant around the circumference of the first tray unit 10. A first distance d₁ between the inlet opening 30 and the centroid 40 of the cross-sectional profile 41 is equal to a second distance d₂ between the inlet opening 30 and the separator axis 8. The first distance d₁ and the second distance d₂ may be measured from a centre (i.e. a centroid) of the inlet opening 30.

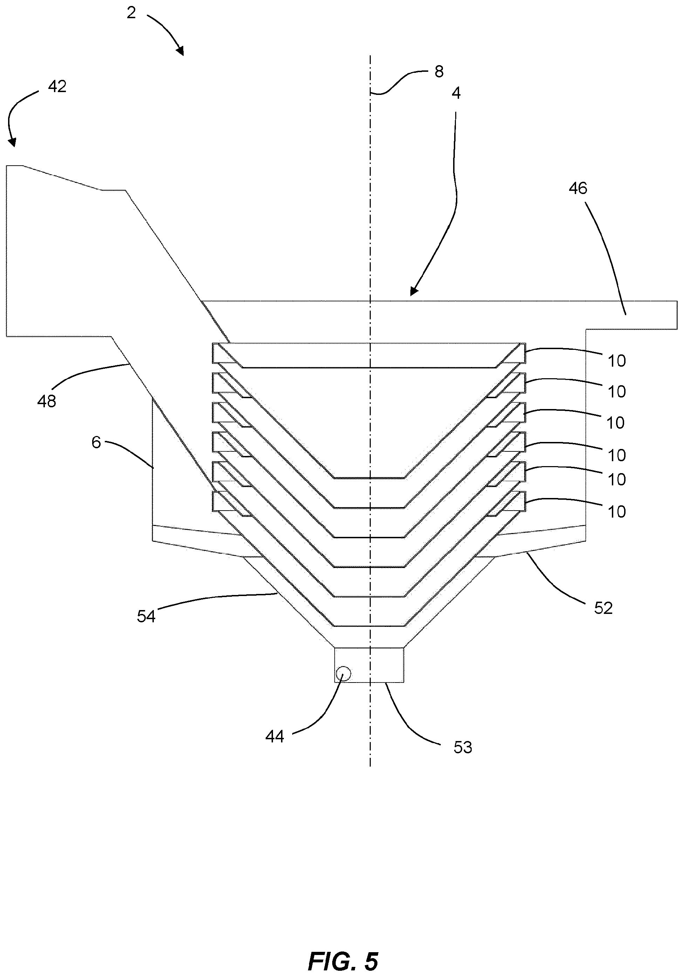

**Figure 5** is a further schematic cross-sectional side view of the separator 2 taken across a second vertical viewing plane that is angled 90 degrees from the first vertical viewing plane of Figure 2A. As shown, the fluids outlet 46 is disposed above the uppermost tray unit 10. A constant clearance is formed between the lip portion 18 of each of the underlying tray units 10 and its respective overlying tray unit 10.

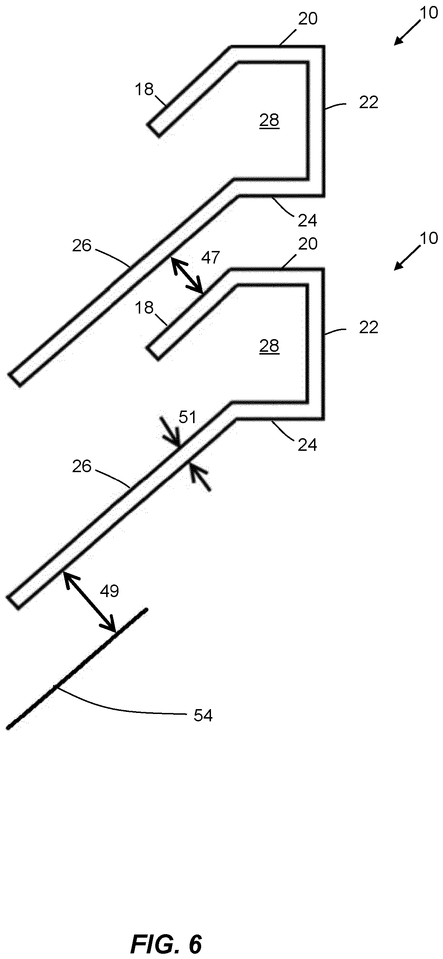

**Figure 6** is a schematic cross-sectional close-up side view of the baseline separator 2, in particular the two lowermost baseline tray units 10 of the tray assembly 4 and a portion of the inner funnel section 54 of the base of the treatment vessel 6. As shown, the tray unit 10 has a thickness 51, which may be 3 mm, for example. A minimum inter-tray gap 47 of the tray assembly 4 is formed between the settling portion 26 of the upper tray unit 10 and the lip portion 18 of the lower tray unit 10. Each of the tray units 10 of the tray assembly 4 are equally spaced from each other. Alternatively, the tray units 10 may be unequally spaced, in which case the minimum inter-tray gap 47 of the tray assembly 4 may be formed between tray units 10 other than the two lowermost tray units 10 of the tray assembly 4 shown in Figure 6. A minimum tray assembly-treatment vessel gap 49 is formed between the tray assembly 4 and the treatment vessel 6. In the example shown, the minimum tray assembly-treatment vessel gap 49 is formed between the settling portion 26 of the lowermost tray unit 10 of the tray assembly 4 and the inner funnel section 54 of the treatment vessel 6.

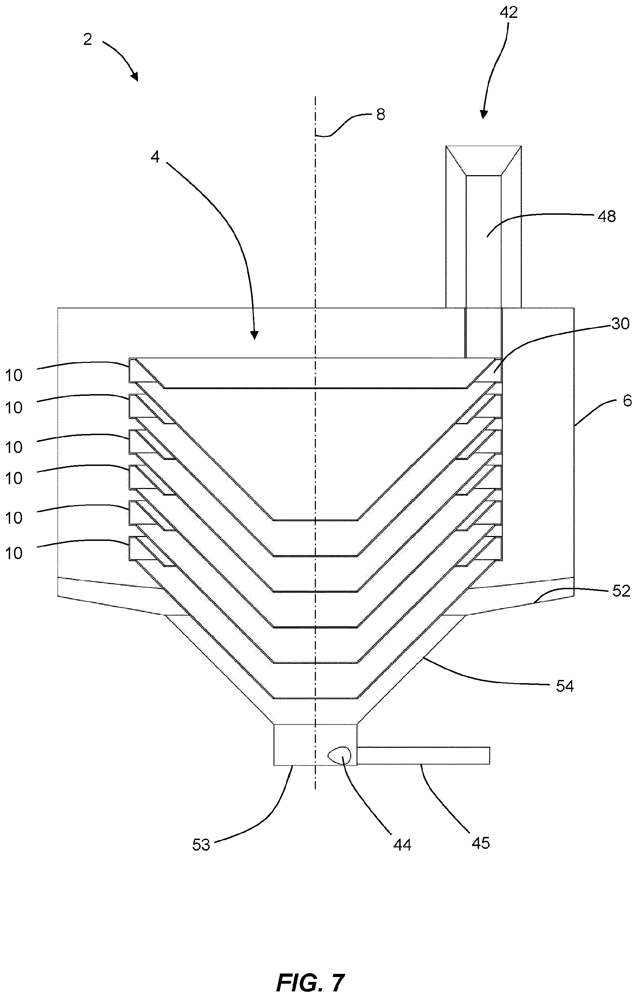

**Figure** 7 is a schematic cross-sectional side view of the separator 2 taken across the first vertical viewing plane. As shown, each of the inlet passageways 50 and the inlet openings 30 of the tray units 10 are arranged vertically in line with each other.

During use, the treatment vessel 6 is flooded so that the tray assembly 4 is submerged. An influent solid-liquid mixture such as grit entrained by water is supplied though the inlet chute 42 and flows downwardly along the manifold passageway 48, into the inlet passageways 50 and into the internal volumes 15 of respective tray units 10 via respective inlet openings 30. The tangential arrangement of the inlet passageways 50 and the inlet openings 30 causes the solid-liquid mixture to circulate within the internal volume 15 about the separator axis 8.

The circulating flow allows the entrained grit to settle on the settling portions 26 of the tray units 10. Since the settling portions 26 taper inwardly toward the separator axis 8 in a direction 35 toward the outlet edge 14 (i.e. they are sloped), grit that has settled on the settling portions 26 gravitates towards and falls through the outlet opening 34. Grit falling through the outlet opening 34 of all but the lowermost tray unit 10 settles on the settling portion 26 of an underlying tray unit 10 and gravitates towards and through the outlet opening 34 of the underlying tray unit 10. The grit passes through the respective outlet openings 30 in this manner until it is expelled from outlet opening 30 of the lowermost tray unit 10 into the sump 53. Grit that has collected in the sump 53 may be continuously or periodically removed from the sump 53 via the grit outlet 44. For example, grit may be sucked out of the sump 53 through the outlet pipe 45 via the grit outlet 44 using a pump.

De-gritted water circulating within the internal volume 15 of each tray unit 10 flows upwardly out of the internal volume 15 via the overflow opening 32 into the outer region of the treatment vessel 6. The lip portions 18 help to retain some of the grit which has collected on the surface of each settling portion 26 within the tray units 10. De-gritted water which has collected in the outer region of the treatment vessel 6 then exits the treatment vessel 6 by overflowing through the fluids outlet 46.

The underflow collection efficiency of the separator 2 is defined by the following equation, **in which** *η_{underflow}* represents the underflow collection efficiency of the separator 2, *m_{introduced}* represents the mass of solid particles introduced into the vessel 6 at an initial time of 0 seconds and *m_{underflow}* represents the mass of solid particles that have exited the vessel 6 via the sump 53 at a predetermined time following the initial time: ${η}_{underflow} = \frac{{m}_{underflow}}{{m}_{introduced}}$

**Accordingly,** an increase in the mass *m_{underflow}* of solid particles that have exited the vessel 6 via the sump 53 at the predetermined time results in an increase in the underflow collection efficiency *η_{underflow}* of the separator 2.

The total collection efficiency of the separator 2 is defined by the following equation, in which *ηₜₒₜₐₗ* represents the total collection efficiency of the separator 2, *m_{introduced}* represents the mass of solid particles introduced into the vessel 6 at an initial time of 0 seconds, *m_{underflow}* represents the mass of solid particles that have exited the vessel 6 via the sump 53 at a predetermined time following the initial time and *mᵥₑₛₛₑₗ* represents the mass of solid particles that remain in the vessel 6 at the predetermined time following the initial time (i.e. the mass of solid particles that have not exited the vessel 6 via the sump 53 or the fluids outlet 46 at the predetermined time following the initial time): ${η}_{total} = \frac{{m}_{vessel} + {m}_{underflow}}{{m}_{introduced}}$

**Accordingly,** an increase in the mass *mᵥₑₛₛₑₗ* of solid particles that remain in the vessel 6 at the predetermined time and an increase in the mass *m_{underflow}* of solid particles that have exited the vessel 6 via the sump 53 at the predetermined time results in an increase in the total collection efficiency *ηₜₒₜₐₗ* of the separator 2.

The total collection efficiency *ηₜₒₜₐₗ* of the separator 2 may also be defined by the following equation, in which *ηₜₒₜₐₗ* represents the total collection efficiency of the separator 2, *m_{introduced}* represents the mass of solid particles introduced into the vessel 6 at an initial time of 0 seconds and *m_{overflow}* represents the mass of solid particles that have exited the vessel 6 via the fluids outlet 46 at the predetermined time following the initial time: ${η}_{total} = 1 - \frac{{m}_{overflow}}{{m}_{introduced}}$

During use, the kinetic energy of the solid-liquid mixture entering the respective tray units 10 via the respective inlet openings 30 is relatively high but reduces over time as it circulates within the internal volume 15 about the separator axis 8. The momentum of the high energy flow of solid-liquid mixture that has entered the internal volume 15 causes a relatively high proportion of the solid-liquid mixture within the internal volume 15 to not be directed toward the outlet opening 34. The momentum of the high energy flow of solid-liquid mixture that has entered the internal volume 15 also causes some of the solids that have previously settled on (or would otherwise have settled on) the settling portions 26 of the tray units 10 to be ejected from the internal volume 15 via the overflow opening 32. This effect is particularly pronounced at regions of the settling portion 26 located approximately 180 degrees from the inlet openings 30. In addition, a recirculating, precessing vortex core is formed along the separator axis 8. The vortex core resuspends grit that has settled on the settling portion 26 of the tray units 10. Each of these factors reduces the mass *m_{underflow}* of solid particles exiting the vessel 6 via the sump 53, reduces the mass *mᵥₑₛₛₑₗ* of solid particles retained within the vessel 6 and increases the mass *m_{overflow}* of solid particles exiting the vessel 6 via the fluids outlet 46. Accordingly, these factors reduce the underflow collection efficiency *η_{underflow}* and total collection efficiency *ηₜₒₜₐₗ* of the separator 2.

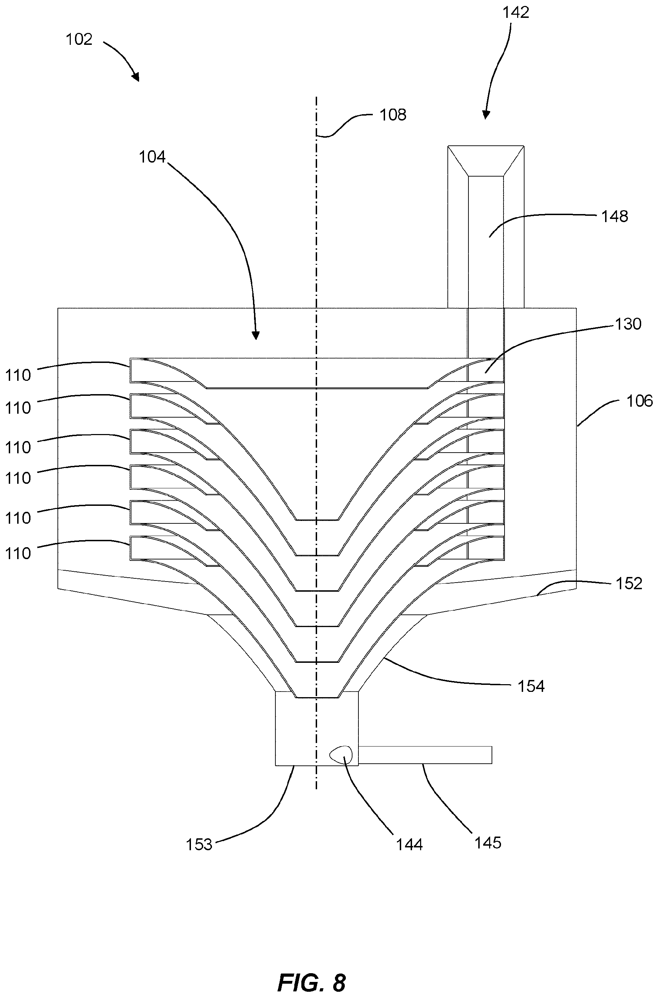

**Figure 8** is a schematic cross-sectional side view of a first separator 102 that differs from the baseline separator 2. The first separator 102 corresponds in a number of respects to the baseline separator 2, and corresponding features are denoted using common reference numerals with the addition of a value of 100. The first separator 102 differs from the known separator 2 in that it comprises a first tray assembly 104 disposed within a first treatment vessel 106 rather than the known tray assembly 4 described with reference to Figure 7.

As with the known separator 2, the first separator 102 may be part of a wastewater treatment installation, and its function may be to separate grit and similar particles from a flow of solid-liquid mixture (e.g. wastewater) prior to further treatment processes. The first separator 102 has a separator axis 108, which is preferably substantially vertical. The first tray assembly 104 differs from the known tray assembly 104 in that it comprises a plurality of first tray units 110 rather than a plurality of the tray units 10 described with reference to Figures 2A and 2B. The first tray units 110 are identical to each other. Six first tray units 110 are shown in Figure 8, but it will be appreciated that the first tray assembly 104 could comprise more or fewer first tray units 110. The nested first tray units 110 are disposed along the separator axis 108 and are spaced apart from each other along the separator axis 108.

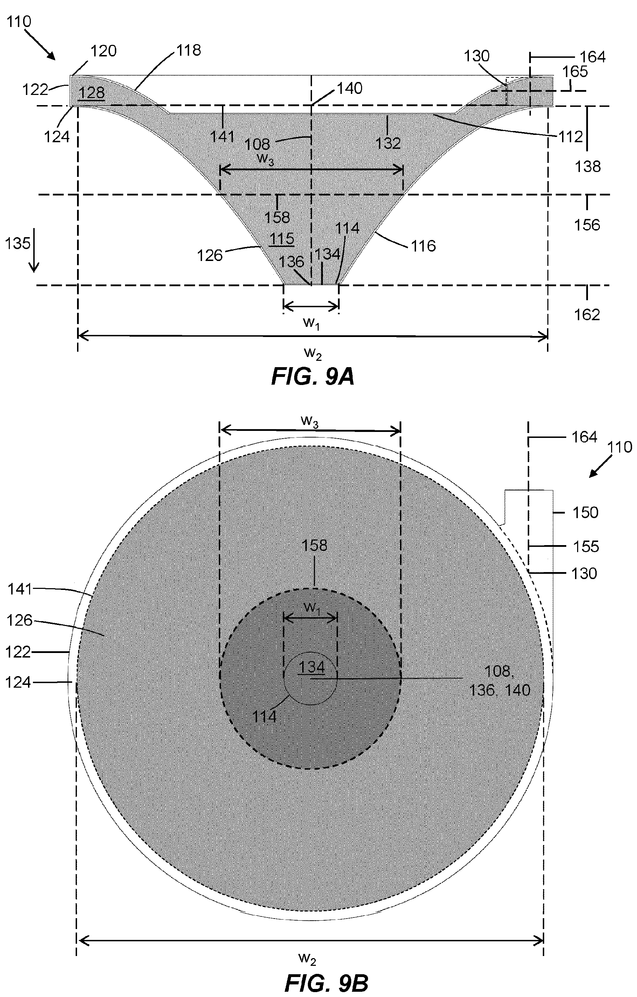

**Figure 9A** is a schematic cross-sectional side view of the first tray unit 110 and **Figure 9B** is a cross-sectional plan view of the first tray unit 110. The cross-sectional side view of the first tray unit 110 shown in Figure 9A is taken across a first vertical viewing plane corresponding to that across which the cross-sectional side view of Figure 2A is taken so as to allow direct comparison between the first tray unit 110 and the tray unit 10.

The first tray unit 110 comprises an overflow edge 112, an outlet edge 114 and a surface 116 that extends between the overflow edge 112 and the outlet edge 114. The overflow edge 112 defines an overflow opening 132. The overflow edge 121 and the overflow opening 132 are planar. The overflow edge 112 and the overflow opening 132 lie on a plane that is perpendicular to the separator axis 108. The overflow edge 112, and, thus, the overflow opening 132, are circular, although in other arrangements they may have another profile, for example an elliptical profile. The outlet edge 114 defines an outlet opening 134. The outlet opening 134 has a maximum width w₁ and an area *Σ_{lower}*. The outlet opening 134 has a centroid 136 through which the separator axis 108 extends.

The surface 116 defines an internal volume 115 of the first tray unit 110. The cross-section of the internal volume 115 is shaded in Figure 9A, for ease of reference. The surface 116 is formed of multiple sections including a lip portion 118, an upper horizontal portion 120, an outer portion 122, a lower horizontal portion 124 and a settling portion 126. In alternative arrangements, one or more of the lip portion 118, the upper horizontal portion 120, the outer portion 122 and the lower horizontal portion 124 may be dispensed with or have different geometries. The multiple sections of the surface 116 may be separately manufactured and assembled together or be integrally formed with each other (e.g. when the first tray unit 110 is a plastics moulding).

The lip portion 118, the upper horizontal portion 120, the outer portion 122, the lower horizontal portion 124 and the settling portion 126 extend around the separator axis 108. The lip portion 118 defines the overflow edge 112. The upper horizontal portion 120, the outer portion 122 and the lower horizontal portion 124 define an annular channel 128. The outer portion 122 defines an inlet opening 130. The annular channel 128 forms part of the internal volume 15 of the tray unit 10. The inlet passageways 150 are each in direct communication with a respective first tray unit 110 via respective inlet openings 130. The annular channel 128 forms part of the internal volume 115 of the first tray unit 110. As shown in Figure 9A, the settling portion 126 has a concave cross-sectional profile. That is, the cross-sectional profile of the settling portion 126 is concave (i.e. concave-down) when the first tray unit 110 is oriented such that the overflow opening 132 is positioned above the outlet opening 134. The gradient of the settling portion 126 relative to the separator axis 108 gradually reduces towards the outlet edge 114. That is, the angle formed between the settling portion 126 and the separator axis 108 is greatest at the upper portion of the first tray unit 110 (i.e. proximal the lower horizontal portion 124) and smallest at the lower portion of the first tray unit 110 (i.e. proximal the outlet opening 134). Accordingly, the settling portion 126 has a bell mouth profile. The profile of the settling portion 126 may alternatively be formed of multiple (i.e. two or more) frustoconical portions approximating a bell mouth profile. The lip portion 118 faces away from the separator axis 108. The lip portion 118 is inclined so as to be parallel to the settling portion 126, however in alternative embodiments this need not be the case. The upper horizontal portion 120 and the lower horizontal portion 124 are planar and extend perpendicularly with respect to the separator axis 108. The gradient of the surface 116 changes gradually between the settling portion 126 and the lower horizontal portion 124 such that the interface between the settling portion 126 and the lower horizontal portion 124 is smooth (i.e. rounded). The outer portion 122 is cylindrical and has a central axis that coincides with the separator axis 108. The lip portion 118 and the upper horizontal portion 120 extend radially inwardly from the outer portion 122.

The settling portion 126 faces the separator axis 108. That is, the settling portion 126 is not orthogonal with respect to the separator axis 108 and does not face away from the separator axis 108. The settling portion 126 tapers inwardly toward the separator axis 108 in a direction 135 toward the outlet edge 114. Accordingly, the cross-sectional area bounded by the settling portion 126 and defined perpendicular to the separator axis 108 decreases along the settling portion 126 from the lower horizontal portion 124 to the outlet 134. The cross-sectional area bounded by the settling portion 126 and defined perpendicular to the separator axis 108 is at a maximum on a first plane 138 of the first tray unit 110. That is, the cross-sectional area bounded by the settling portion 126 and measured perpendicular to the separator axis 108 is smaller at all other points along the separator axis 108. The first plane 138 is disposed at the interface between the settling portion 126 and the lower horizontal portion 124, however it will be appreciated that in other embodiments this may not be the case. The first tray unit 110 further comprises a second plane 156 that extends perpendicular to the separator axis 108 and is equidistant from the first plane 138 and the centroid 136 of the outlet opening 134. The first tray unit 110 further comprises a third plane 162 on which the centroid 136 and the outlet edge 114 lies. The third plane 156 extends perpendicular to the separator axis 108. The first, second and third planes 138, 156, 162 are parallel to each other.

Figure 9B is a cross-sectional plan view of the first tray unit 110 of Figure 9A taken above the first plane 138. For clarity, the overflow edge 112 and the lip portion 118 are not shown in Figure 9B. As shown, the outlet edge 114, and, thus, the outlet opening 134, are circular, although in other arrangements they may have another profile, for example an elliptical profile. A cross-sectional profile 141 of the settling portion 126 on the first plane 138 is shown in light and dark shading in Figure 9B. An area *Σᵤₚₚₑᵣ* is bounded by the cross-sectional profile 141 of the settling portion 126 on the first plane 138. The cross-sectional profile 141 has a maximum width w₂. A cross-sectional profile 158 of the settling portion 126 on the second plane 156 is shown in dark shading in Figure 9B. The cross-sectional profile 158 has a maximum width w₃.

A concavity ratio of the settling portion 126 is defined by the following equation, in which *r_{c}* represents the concavity ratio, *w₁* represents the maximum width of the outlet opening 134, *w₂* represents the maximum width of the cross-sectional profile 141 and *w₃* represents the maximum width of the cross-sectional profile 158: ${r}_{c} = \frac{{w}_{3} - {w}_{1}}{{w}_{2} - {w}_{1}}$

It will be generally appreciated that the concavity ratio *r_{c}* of a concave (i.e. bell mouth-shaped) settling portion such as the settling portion 126 of the first tray unit 110 is greater than 0 and less than 0.5, the concavity ratio *r_{c}* of a frustoconical settling portion is equal to 0.5 and the concavity ratio *r_{c}* of a convex (i.e. bowl-shaped) settling portion is greater than 0.5 and less than 1.

An outlet area ratio of the first tray unit 110 is defined by the following equation, in which *r_{A}* represents the outlet area ratio, *Σᵤₚₚₑᵣ* represents the area bounded by the cross-sectional profile 141 of the settling portion 126 on the first plane 138 and *Σ_{lower}* represents the area of the outlet opening 134: ${r}_{A} = \frac{{Σ}_{lower}}{{Σ}_{upper}}$

It will be appreciated that tray units that taper more have a lower outlet area ratio *r_{A}*, and vice versa.

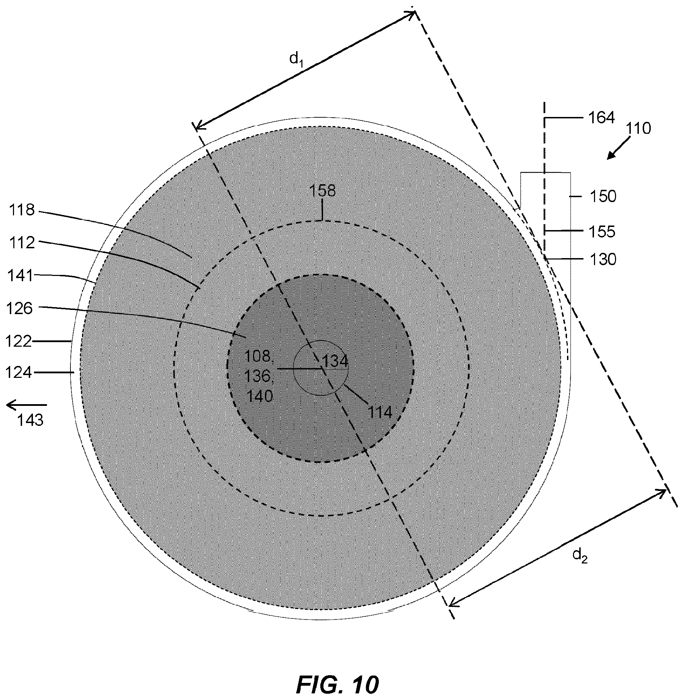

**Figure 10** is a further schematic cross-sectional plan view of the first tray unit 110. The view of Figure 10 generally corresponds to the view of Figure 9B but has been marked-up to indicate additional features of the first tray unit 110. The overflow edge 112 that defines the overflow opening 132 is shown in phantom in Figure 10. As shown, the radial extent of the lip portion 118 is constant around the circumference of the first tray unit 110. The cross-sectional profile 141 has a centroid 140. A first distance d₁ between the inlet opening 130 and the centroid 140 of the cross-sectional profile 141 is equal to a second distance d₂ between the inlet opening 130 and the separator axis 108. The first distance d₁ and the second distance d₂ may be measured from a centre (i.e. a centroid) of the inlet opening 130.

Returning to Figure 8, the first treatment vessel 106 substantially corresponds to the known treatment vessel 6 described with reference to Figures 1 to 7. However, the inner funnel section 154 of the first treatment vessel 106 is concave and profiled such that a substantially constant clearance is maintained between the inner funnel section 154 and the lowermost tray unit 110.

During use, the first separator 102 functions in a similar manner to the known separator 2. However, providing the settling portions 126 with concave profiles increases the speed of flow of the solid-liquid mixture within the internal volume 115 compared to the known separator 2. Since the direction of flow of a relatively high proportion of the solid-liquid mixture within the internal volume 115 is not directed to the outlet opening 134, this increases the proportion of solids within the solid-liquid mixture that are ejected from the internal volume 115 via the overflow opening 132, which reduces the underflow collection efficiency *η_{underflow}* and total collection efficiency *ηₜₒₜₐₗ* of the first separator 102 when compared with the known separator 2.

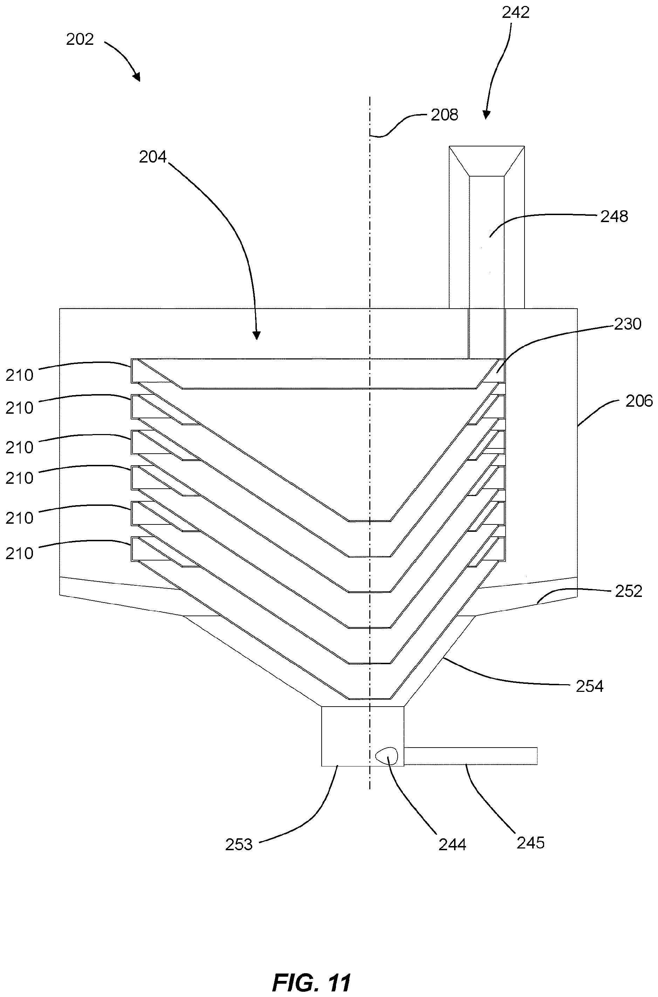

**Figure 11** is a schematic cross-sectional side view of a second separator 202, which is in accordance with the invention. The second separator 202 corresponds in a number of respects to the baseline separator 2, and corresponding features are denoted using common reference numerals with the addition of a value of 200. The second separator 202 differs from the baseline separator 2 in that it comprises a second tray assembly 204 disposed within a second treatment vessel 206 rather than the tray assembly 4 disposed with the treatment vessel 6 described with reference to Figure 1.

As with the baseline separator 2, the second separator 202 may be part of a wastewater treatment installation, and its function may be to separate grit and similar particles from a flow of solid-liquid mixture (e.g. wastewater) prior to further treatment processes. The second separator 202 has a separator axis 208, which is preferably substantially vertical. The second tray assembly 204 differs from the baseline tray assembly 4 in that it comprises a plurality of second tray units 210 rather than a plurality of the tray units 10 described with reference to Figures 2A and 2B. The second tray units 210 are identical 210 to each other. Six second tray units 210 are shown in Figure 11, but it will be appreciated that the second tray assembly 204 could comprise more or fewer second tray units 210. The nested second tray units 210 are disposed along the separator axis 208 and are spaced apart from each other along the separator axis 208.

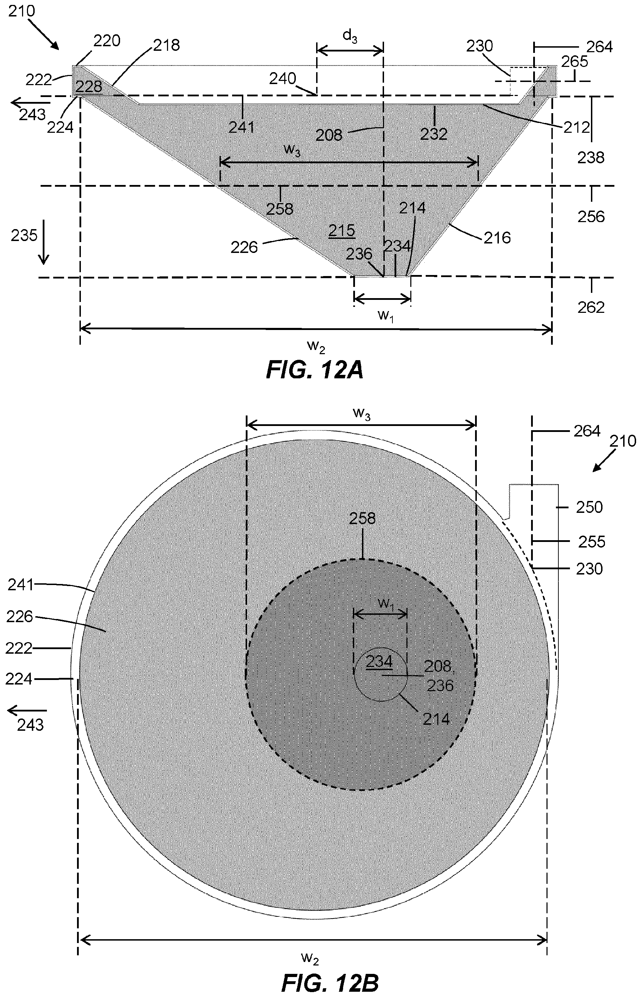

**Figure 12A** is a schematic cross-sectional side view of the second tray unit 210 and **Figure 12B** is a schematic cross-sectional plan view of the second tray unit 210. The cross-sectional side view of the second tray unit 210 shown in Figure 12A is taken across a first vertical viewing plane corresponding to that across which the cross-sectional side views of Figures 2A and 9A are taken so as to allow direct comparison between the second tray unit 210, the first tray unit 110 and the tray unit 10.

The second tray unit 210 comprises an overflow edge 212, an outlet edge 214 and a surface 216 that extends between the overflow edge 212 and the outlet edge 214. The overflow edge 212 defines an overflow opening 232. The overflow edge 212 and the overflow opening 232 are planar. The overflow edge 212 and the overflow opening 232 lie on a plane that is perpendicular to the separator axis 208. The overflow edge 212, and, thus, the overflow opening 232, are circular. The outlet edge 214 defines an outlet opening 234. The outlet opening 234 has a maximum width w₁ and an area *Σ_{lower}*. The outlet opening 234 has a centroid 236 through which the separator axis 208 extends.

The surface 216 defines an internal volume 215 of the second tray unit 210. The cross-section of the internal volume 215 is shaded in Figure 12A, for ease of reference. The surface 216 is formed of multiple sections including a lip portion 218, an upper horizontal portion 220, an outer portion 222, a lower horizontal portion 224 and a settling portion 226. In alternative arrangements, one or more of the lip portion 218, the upper horizontal portion 220, the outer portion 222 and the lower horizontal portion 224 may be dispensed with or have different geometries. The multiple sections of the surface 216 may be separately manufactured and assembled together or be integrally formed with each other (e.g. when the second tray unit 210 is a plastics moulding).

The lip portion 218, the upper horizontal portion 220, the outer portion 222, the lower horizontal portion 224 and the settling portion 226 extend around the separator axis 208. The lip portion 218 defines the overflow edge 212. The upper horizontal portion 220, the outer portion 222 and the lower horizontal portion 224 define an annular channel 228. The outer portion 222 defines an inlet opening 230. The annular channel 227 forms part of the internal volume 215 of the tray unit 210. The inlet passageways 250 are each in direct communication with a respective second tray unit 210 via respective inlet openings 230. The annular channel 228 forms part of the internal volume 215 of the second tray unit 210. The settling portion 226 and the lip portion 218 are frustoconical. The lip portion 218 faces away from the separator axis 208. The lip portion 218 is inclined so as to be parallel to the settling portion 226, however in alternative embodiments this need not be the case. The upper horizontal portion 220 and the lower horizontal portion 224 are planar and extend perpendicularly with respect to the separator axis 208. The gradient of the surface 216 changes at a single line between the settling portion 226 and the lower horizontal portion 224 such that an edge is formed between the settling portion 226 and the lower horizontal portion 224. The outer portion 222 is cylindrical and has a central axis that is parallel with the separator axis 208. The lip portion 218 and the upper horizontal portion 220 extend radially inwardly from the outer portion 222.

The settling portion 226 faces the separator axis 208. That is, the settling portion 226 is not orthogonal with respect to the separator axis 208 and does not face away from the separator axis 208. The settling portion 226 tapers inwardly toward the separator axis 208 in a direction 235 toward the outlet edge 214. Accordingly, the cross-sectional area bounded by the settling portion 226 and defined perpendicular to the separator axis 208 decreases along the settling portion 226 from the lower horizontal portion 224 to the outlet 234. The cross-sectional area bounded by the settling portion 226 and defined perpendicular to the separator axis 208 is at a maximum on a first plane 238 of the second tray unit 210. That is, the cross-sectional area bounded by the settling portion 226 and measured perpendicular to the separator axis 208 is smaller at all other points along the separator axis 208. The first plane 238 is disposed at the interface between the settling portion 226 and the lower horizontal portion 224, however it will be appreciated that in other embodiments this may not be the case. The second tray unit 210 further comprises a second plane 256 that extends perpendicular to the separator axis 208 and is equidistant from the first plane 238 and the centroid 236 of the outlet opening 234. The second tray unit 210 further comprises a third plane 262 on which the centroid 236 and the outlet edge 214 lies. The third plane 256 extends perpendicular to the separator axis 208. The first, second and third planes 238, 256, 262 are parallel to each other.

Figure 12B is a cross-sectional plan view of the second tray unit 210 of Figure 12A taken above the first plane 238. For clarity, the overflow edge 212 and the lip portion 218 are not shown in Figure 12B. As shown, the outlet edge 214, and, thus, the outlet opening 234, are circular. A cross-sectional profile 241 of the settling portion 226 on the first plane 238 is shown in light and dark shading in Figure 12B. An area *Σᵤₚₚₑᵣ* is bounded by the cross-sectional profile 241 of the settling portion 226 on the first plane 238. The cross-sectional profile 241 has a maximum width w₂. A cross-sectional profile 258 of the settling portion 226 on the second plane 256 is shown in dark shading in Figure 12B. The cross-sectional profile 258 has a maximum width w₃.

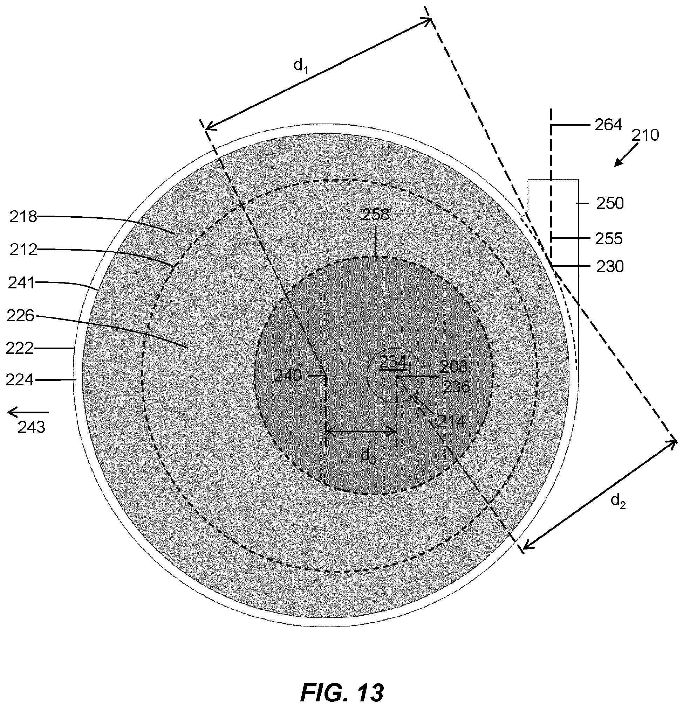

**Figure** 13 is a further schematic cross-sectional plan view of the second tray unit 210. The view of Figure 13 generally corresponds to the view of Figure 12B but has been marked-up to indicate additional features of the second tray unit 210. The overflow edge 212 that defines the overflow opening 232 is shown in phantom in Figure 13. As shown, the radial extent of the lip portion 218 is greater on the side of the tray unit 210 opposing the inlet opening 230 than on the side of the tray unit 210 defining the inlet opening 230. The cross-sectional profile 241 has a centroid 240. A first distance d₁ between the inlet opening 230 and the centroid 240 of the cross-sectional profile 241 is greater than a second distance d₂ between the inlet opening 230 and the separator axis 208. The first distance d₁ and the second distance d₂ may be measured from a centre (i.e. a centroid) of the inlet opening 230. The centroid 240 of the cross-sectional profile 241 is offset away from the separator axis 208 by a third distance d₃. Accordingly, the settling portion 226 is not axisymmetric around the separator axis 208. A direction 243 of the offset of the centroid 240 away from the separator axis 208 is perpendicular to the inlet plane 264 on which the centreline 255 of the inlet passageway 250 is disposed, however in alternative embodiments this need not be the case.

An offset ratio of the settling portion 226 is defined by the following equation, in which *rₒ* represents the offset ratio, *d₃* represents the amount of offset of the centroid 240 of the cross-sectional profile 241 away from the separator axis 208 and *w₂* represents the maximum width of the cross-sectional profile 241: ${r}_{o} = \frac{{d}_{3}}{{w}_{2}}$

In contrast and returning to Figure 2A, it will be appreciated that the offset ratio *rₒ* of the settling portion 6 of the baseline separator 2 is zero, since the amount of offset d₃ of the centroid 40 of the cross-sectional profile 41 away from the separator axis 8 is zero (i.e. since the centroid 40 of the cross-sectional profile 41 is aligned with the separator axis 8). Likewise, returning to Figure 9A, it will be appreciated that the offset ratio *rₒ* of the settling portion 106 of the first separator 102 is zero, since the amount of offset d₃ of the centroid 140 of the cross-sectional profile 141 away from the separator axis 108 is zero (i.e. since the centroid 140 of the cross-sectional profile 141 is aligned with the separator axis 108). Accordingly, a smaller offset ratio *rₒ* results in a smaller amount of offset and a larger offset ratio *rₒ* results in a larger amount of offset, and the offset ratio *rₒ* will be zero in arrangements in which the offset d₃ of the centroid of the cross-sectional profile of the settling portion on the first plane away from the separator axis is zero.

Returning to Figure 11, the second treatment vessel 206 substantially corresponds to the known treatment vessel 6 described with reference to Figures 1 to 7. However, the frustoconical inner funnel section 254 of the second treatment vessel 206 is offset as per the settling portion 226 and profiled such that a substantially constant clearance is maintained between the inner funnel section 254 and the lowermost tray unit 210.

During use, the second separator 202 functions in a similar manner to the known separator 2. However, it has been found that providing the settling portions 226 with offset profiles as described above (i.e. in which a first distance d₁ between the inlet opening 230 and the centroid 240 of the cross-sectional profile 241 is greater than a second distance d₂ between the inlet opening 230 and the separator axis 208) inhibits the development of the recirculating, precessing vortex core. Accordingly, the vortex core formed along the separator axis 208 within the internal volume 215 of the second tray unit 210 is comparatively weaker than the vortex core formed along the separator axis 8 within the internal volume 15 of the tray units 10 described with reference to Figures 2A and 2B. This reduces the amount of grit that is resuspended by the vortex core compared to the tray units 10 described with reference to Figures 2A to 4. In addition, it has been found that providing the settling portions 226 with offset profiles as described above reduces the proportion of the solid-liquid mixture within the internal volume 215 that is not directed to the outlet opening 234. Each of these factors increases the mass *m_{underflow}* of solid particles exiting the vessel 206 via the sump 253, increases the mass *mᵥₑₛₛₑₗ* of solid particles retained within the vessel 206 and reduces the mass *m_{overflow}* of solid particles exiting the vessel 206 via the fluids outlet 246 when compared to the known separator 2, which in turn increases the underflow collection efficiency *η_{underflow}* and total collection efficiency *ηₜₒₜₐₗ* of the second separator 202 when compared with the known separator 2 and first separator 102.

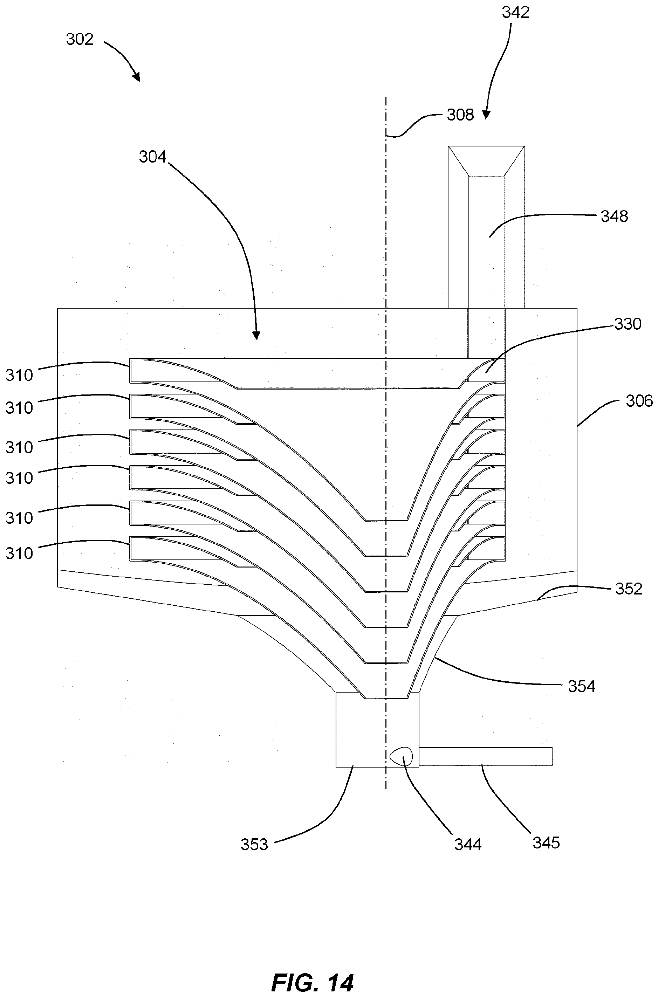

**Figure 14** is a schematic cross-sectional side view of a third separator 302, which is in accordance with the invention. The third separator 302 corresponds in a number of respects to the baseline separator 2, and corresponding features are denoted using common reference numerals with the addition of a value of 300. The third separator 302 differs from the baseline separator 2 in that it comprises a third tray assembly 304 disposed within a third treatment vessel 306 rather than the tray assembly 4 disposed within the treatment vessel 6 described with reference to Figure 1.

As with the baseline separator 2, the third separator 302 may be part of a wastewater treatment installation, and its function may be to separate grit and similar particles from a flow of solid-liquid mixture (e.g. wastewater) prior to further treatment processes. The third separator 302 has a separator axis 308, which is preferably substantially vertical. The third tray assembly 304 differs from the baseline tray assembly 4 in that it comprises a plurality of third tray units 310 rather than a plurality of the tray units 10 described with reference to Figures 2A and 2B. The third tray units 310 are identical to each other. Six third tray units 310 are shown in Figure 14, but it will be appreciated that the third tray assembly 304 could comprise more or fewer third tray units 310. The nested third tray units 310 are disposed along the separator axis 308 and are spaced apart from each other along the separator axis 308.

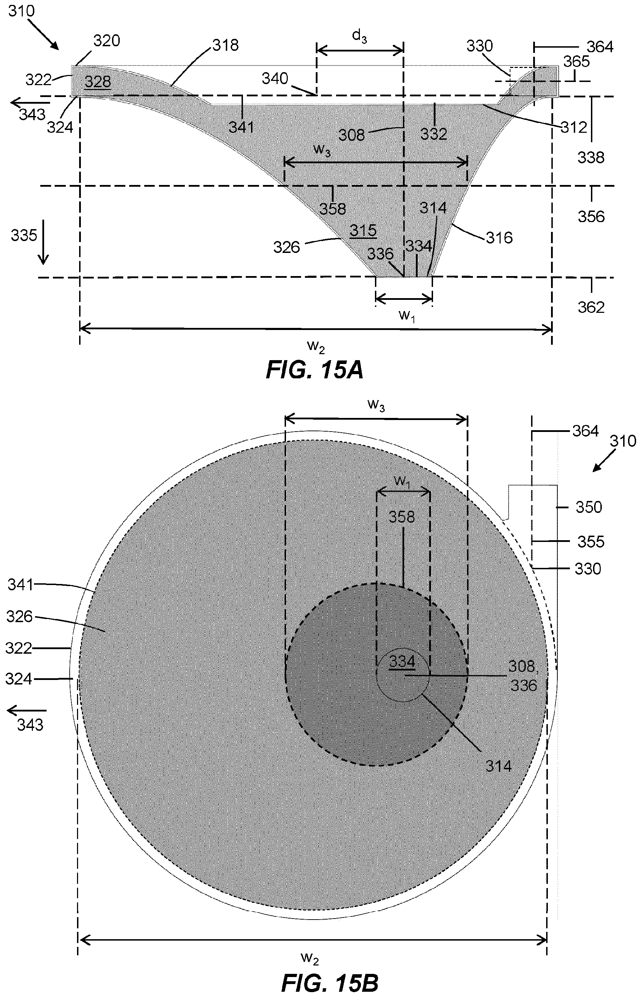

**Figure 15A** is a schematic cross-sectional side view of the third tray unit 310 and **Figure 15B** is a cross-sectional plan view of the third tray unit 310. The cross-sectional side view of the third tray unit 310 shown in Figure 15A is taken across a first vertical viewing plane corresponding to that across which the cross-sectional side views of Figures 2A, 9A and 12A are taken so as to allow direct comparison between the third tray unit 310, the second tray unit 210, the first tray unit 110 and the tray unit 10.

The third tray unit 310 comprises an overflow edge 312, an outlet edge 314 and a surface 316 that extends between the overflow edge 312 and the outlet edge 314. The overflow edge 312 defines an overflow opening 332. The overflow edge 312 and the overflow opening 332 are planar. The overflow edge 312 and the overflow opening 332 lie on a plane that is perpendicular to the separator axis 308. The overflow edge 312, and, thus, the overflow opening 332, are circular. The outlet edge 314 defines an outlet opening 334. The outlet opening 334 has a maximum width w₁ and an area *Σ_{lower}*. The outlet opening 334 has a centroid 336 through which the separator axis 308 extends.

The surface 316 defines an internal volume 315 of the third tray unit 310. The cross-section of the internal volume 315 is shaded in Figure 15A, for ease of reference. The surface 316 is formed of multiple sections including a lip portion 318, an upper horizontal portion 320, an outer portion 322, a lower horizontal portion 324 and a settling portion 326. In alternative arrangements, one or more of the lip portion 318, the upper horizontal portion 320, the outer portion 322 and the lower horizontal portion 324 may be dispensed with or have different geometries. The multiple sections of the surface 316 may be separately manufactured and assembled together or be integrally formed with each other (e.g. when the third tray unit 310 is a plastics moulding).

The lip portion 318, the upper horizontal portion 320, the outer portion 322, the lower horizontal portion 324 and the settling portion 326 extend around the separator axis 308. The lip portion 318 defines the overflow edge 312. The upper horizontal portion 320, the outer portion 322 and the lower horizontal portion 324 define an annular channel 328. The outer portion 322 defines an inlet opening 330. The annular channel 328 forms part of the internal volume 315 of the tray unit 310. The inlet passageways 350 are each in direct communication with a respective third tray unit 310 via respective inlet openings 330. The annular channel 328 forms part of the internal volume 315 of the third tray unit 310. As shown in Figure 15A, the settling portion 326 has a concave cross-sectional profile. That is, the cross-sectional profile of the settling portion 326 is concave (i.e. concave-down) when the third tray unit 310 is oriented such that the overflow opening 332 is positioned above the outlet opening 334. The gradient of the settling portion 326 relative to the separator axis 308 gradually reduces towards the outlet edge 314. That is, the angle formed between the settling portion 326 and the separator axis 308 is greatest at the upper portion of the third tray unit 310 (i.e. proximal the lower horizontal portion 324) and smallest at the lower portion of the third tray unit 310 (i.e. proximal the outlet opening 334). Accordingly, the settling portion 326 has a bell mouth profile. The profile of the settling portion 326 may alternatively be formed of multiple (i.e. two or more) frustoconical portions approximating a bell mouth profile. The lip portion 318 faces away from the separator axis 308. The lip portion 318 is inclined so as to be parallel to the settling portion 326, however in alternative embodiments this need not be the case. The upper horizontal portion 320 and the lower horizontal portion 324 are planar and extend perpendicularly with respect to the separator axis 308. The gradient of the surface 316 changes gradually between the settling portion 326 and the lower horizontal portion 324 such that the interface between the settling portion 326 and the lower horizontal portion 324 is smooth (i.e. rounded). The outer portion 322 is cylindrical and has a central axis that is parallel with the separator axis 308. The lip portion 318 and the upper horizontal portion 320 extend radially inwardly from the outer portion 322.

The settling portion 326 faces the separator axis 308. That is, the settling portion 326 is not orthogonal with respect to the separator axis 308 and does not face away from the separator axis 308. The settling portion 326 tapers inwardly toward the separator axis 308 in a direction 335 toward the outlet edge 314. Accordingly, the cross-sectional area bounded by the settling portion 326 and defined perpendicular to the separator axis 308 decreases along the settling portion 326 from the lower horizontal portion 324 to the outlet 334. The cross-sectional area bounded by the settling portion 326 and defined perpendicular to the separator axis 308 is at a maximum on a first plane 338 of the third tray unit 310. That is, the cross-sectional area bounded by the settling portion 326 and measured perpendicular to the separator axis 308 is smaller at all other points along the separator axis 308. The first plane 338 is disposed at the interface between the settling portion 326 and the lower horizontal portion 324, however it will be appreciated that in other embodiments this may not be the case. The third tray unit 310 further comprises a second plane 356 that extends perpendicular to the separator axis 308 and is equidistant from the first plane 338 and the centroid 336 of the outlet opening 334. The third tray unit 310 further comprises a third plane 362 on which the centroid 336 and the outlet edge 314 lies. The third plane 356 extends perpendicular to the separator axis 308. The first, second and third planes 338, 356, 362 are parallel to each other.

Figure 15B is a cross-sectional plan view of the third tray unit 310 of Figure 15A taken above the first plane 338. For clarity, the overflow edge 312 and the lip portion 318 are not shown in Figure 15B. As shown, the outlet edge 314, and, thus, the outlet opening 334, are circular. A cross-sectional profile 341 of the settling portion 326 on the first plane 338 is shown in light and dark shading in Figure 15B. An area *Σᵤₚₚₑᵣ* is bounded by the cross-sectional profile 341 of the settling portion 326 on the first plane 338. The cross-sectional profile 341 has a maximum width w₂. A cross-sectional profile 358 of the settling portion 326 on the second plane 356 is shown in dark shading in Figure 15B. The cross-sectional profile 358 has a maximum width w₃.

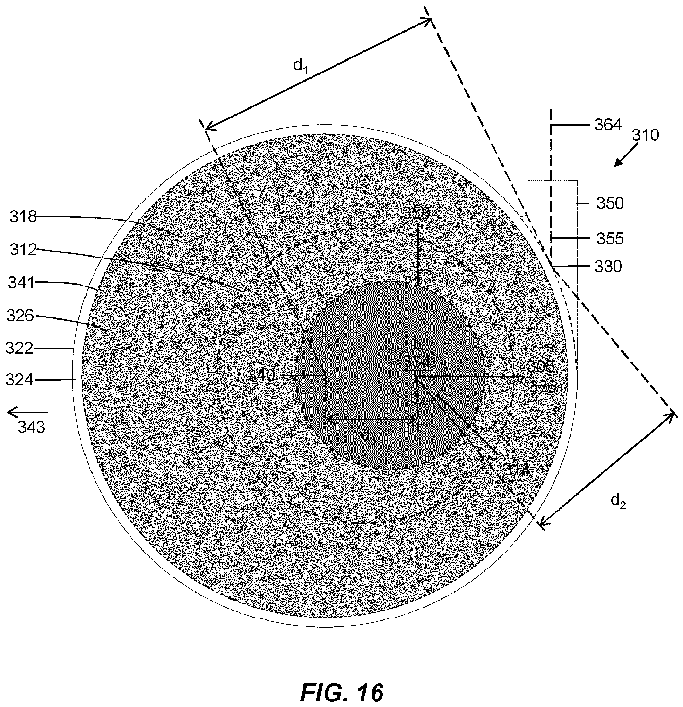

**Figure 16** is a further schematic cross-sectional plan view of the third tray unit 310. The view of Figure 16 generally corresponds to the view of Figure 15B but has been marked-up to indicate additional features of the third tray unit 310. The overflow edge 312 that defines the overflow opening 332 is shown in phantom in Figure 16. As shown, the radial extent of the lip portion 318 is greater on the side of the tray unit 310 opposing the inlet opening 330 than on the side of the tray unit 310 defining the inlet opening 330. The cross-sectional profile 341 has a centroid 340. A first distance d₁ between the inlet opening 330 and the centroid 340 of the cross-sectional profile 341 is greater than a second distance d₂ between the inlet opening 330 and the separator axis 308. The first distance d₁ and the second distance d₂ may be measured from a centre (i.e. a centroid) of the inlet opening 330. The centroid 340 of the cross-sectional profile 341 is offset away from the separator axis 308 by a third distance d₃. Accordingly, the settling portion 326 is not axisymmetric around the separator axis 308. A direction 343 of the offset of the centroid 340 away from the separator axis 308 is perpendicular to the inlet plane 364 on which the centreline 355 of the inlet passageway 350 is disposed, however in alternative embodiments this need not be the case.

Returning to Figure 14, the third treatment vessel 306 substantially corresponds to the known treatment vessel 6 described with reference to Figures 1 to 7. However, the frustoconical inner funnel section 354 of the third treatment vessel 306 is concave and offset as per the settling portion 326 and profiled such that a substantially constant clearance is maintained between the inner funnel section 354 and the lowermost tray unit 310.

During use, the third separator 302 functions in a similar manner to the second separator 202. However, in contrast to the first separator 102 in which providing the settling portions 126 with concave profiles reduces the underflow collection efficiency *η_{underflow}* and total collection efficiency *ηₜₒₜₐₗ*, providing the settling portions 326 of the third separator 302 with concavity combined with offset has been found to increase the underflow collection efficiency *η_{underflow}* and total collection efficiency *ηₜₒₜₐₗ* of the third separator 302 compared with the known separator 2 and the second separator 202. In particular, it has been found that providing the settling portions 326 with concave profiles increases the speed (i.e. reduces the residence time and local mean age) of flow of the solid-liquid mixture within the internal volume 315 compared to the second separator 202 without increasing the proportion of the solid-liquid mixture within the internal volume 215 that is not directed to the outlet opening 234. Increasing the speed of flow of the solid-liquid mixture within the internal volume 315 in the absence of an increase in the proportion of the solid-liquid mixture within the internal volume 315 that is not directed to the outlet opening 334 has the positive effects of reducing resuspension of solids and creating a shorter process cycle, thus allowing a larger volume of solid-liquid mixture to be processed per unit time. It also minimises slow moving areas of fluid and separation zones within the third separator 302, thereby not only reducing the overall residence time of fluid within the third separator 302, but also creating a relatively uniform residence time within different regions of the third separator 302. Each of these factors increases the mass *m_{underflow}* of solid particles exiting the vessel 306 via the sump 353, increases the mass *mᵥₑₛₛₑₗ* of solid particles retained within the vessel 306 and reduces the mass *m_{overflow}* of solid particles exiting the vessel 306 via the fluids outlet 346 when compared to the known separator 2, the first separator 102 and the second separator 202, which in turn increases the underflow collection efficiency *η_{underflow}* and total collection efficiency *ηₜₒₜₐₗ* of the third separator 302 when compared with the known separator 2, the first separator 102 and the second separator 202.

A number of different separators were modelled to demonstrate the improved underflow collection efficiency *η_{underflow}* and total collection efficiency *ηₜₒₜₐₗ* of a separator in accordance with the invention. The separators were modelled using Computer-Aided Design (CAD) software. The separators were modelled at quarter-scale, since it was known that the characteristics of the separator at quarter-scale correspond to those of an equivalent full-scale separator. The modelled separators were provided with a total of six modelled tray units.

The performances of the separators were determined using Computational Fluid Dynamics (CFD) software. In particular, a simulation was carried out using the CFD software in which a fluid having the characteristics of water was continually supplied to the separators via the inlet chute. The modelling was carried out at a modelled tray loading rate φ of 10.6 litre/second/metre² (achieved by providing a flow rate of 41.7 litre/second), which is a typical tray loading rate φ used during operation of such separators. At a time (referred to as 0 seconds above) following the start of the simulation, a predefined mass *m_{introduced}* of solid particles was added to the water being continually supplied to the separator via the inlet chute 42. At a time of 187 seconds (corresponding to ten residence times in the separator), the mass *m_{underflow}* of solid particles that exited the vessel via the sump and the mass *m_{overflow}* of solid particles that exited the vessel via the fluids outlet were determined and the underflow collection efficiency *η_{underflow}* and total collection efficiency *ηₜₒₜₐₗ* of the separator were calculated using the formulae provided above.

This process was carried out for a modelled known separator 2 comprising modelled known tray units 10 corresponding to those described above with reference to Figures 2A to 4 as described above, a modelled first separator 102 comprising modelled first tray units 110 corresponding to those described above with reference to Figures 9A to 10, a modelled second separator 202 comprising modelled second tray units 210 corresponding to those described above with reference to Figures 12A to 13 and a modelled third separator 302 comprising modelled third tray units 310 corresponding to those described above with reference to Figures 15A to 16. The process was also repeated for a number of additional separators in accordance with the first, second and third separators 102, 202, 302, but having varying levels of concavity and offset.

Each of the modelled tray units had the following dimensions at full-scale: w₁ = 400 mm; w₂ = 3520 mm; a₁ = 1356 mm; a₂ = 240 mm; a₃ = 56 mm; a₄ = 56 mm; as = 288 mm; a₇ = 343 mm; a₈ = 216 mm; a₉ = 56 mm; d₁ = 1828 mm; *Σᵤₚₚₑᵣ* = 9.731 m²; *Σ_{lower} =* 0.1256 m²; and *r_{A}* = 0.01291.

**Table** 1 below shows additional dimensions of each of the modelled tray units at full scale, as well as their associated determined underflow collection efficiencies *η_{underflow}* and total collection efficiencies *ηₜₒₜₐₗ*. The values of the minimum tray assembly-treatment vessel gap 49, the minimum inter-tray gap 47, the maximum width w₃ of the cross-sectional profile, the second distance d₂ and the third distance d₃ are given in millimetres, the values of the angles θ are given in degrees, the offset ratio rₒ and the concavity ratio *r_{c}* are dimensionless and the values of the underflow collection efficiencies *η_{underflow}* and the total collection efficiencies *ηₜₒₜₐₗ* are given as percentages.

**Table 1.**

| **Example** | **Minimum tray assembly-treatment vessel gap** | **Minimum inter-tray gap** | **w₃** | **θ** | **d₂** | **d₃** | **rₒ** | **r_{c}** | **η_{underflow}** | **ηₜₒₜₐₗ** |
|---|---|---|---|---|---|---|---|---|---|---|
| 1 | 181.7 | 79.8 | 1960 | 25.90 | 1828 | 0 | 0.0000 | 0.5000 | 12.9 | 18 |
| 2 | 125.2 | 86.3 | 1360 | 25.90 | 1828 | 0 | 0.0000 | 0.3077 | 8.1 | 8.5 |
| 3 | 76.0 | 78.3 | 980 | 25.90 | 1828 | 0 | 0.0000 | 0.1859 | 13.2 | 13.7 |
| 4 | 176.8 | 60.0 | 2104 | 25.90 | 1828 | 0 | 0.0000 | 0.5462 | 12.8 | 22.6 |
| 5 | 121.9 | 85.8 | 1336 | 26.03 | 1820 | 9 | 0.0025 | 0.3000 | 7.5 | 7.7 |
| 6 | 179.3 | 79.2 | 1952 | 26.37 | 1798 | 34 | 0.0096 | 0.4974 | 14.5 | 19.1 |
| 7 | 167.4 | 81.5 | 1820 | 26.76 | 1774 | 61 | 0.0172 | 0.4551 | 12.1 | 15.6 |
| 8 | 125.3 | 83.8 | 1412 | 27.20 | 1747 | 91 | 0.0257 | 0.3244 | 11.7 | 12.2 |
| 9 | 103.8 | 82.1 | 1228 | 27.21 | 1746 | 91 | 0.0260 | 0.2654 | 11.7 | 11.7 |
| 10 | 156.0 | 81.3 | 1732 | 27.58 | 1725 | 115 | 0.0327 | 0.4269 | 13.6 | 17.2 |
| 11 | 169.9 | 65.8 | 2024 | 28.42 | 1678 | 169 | 0.0479 | 0.5205 | 11.9 | 19.3 |
| 12 | 160.1 | 76.8 | 1844 | 28.93 | 1651 | 200 | 0.0567 | 0.4628 | 14.7 | 19.8 |
| 13 | 132.5 | 80.4 | 1552 | 29.02 | 1646 | 205 | 0.0581 | 0.3692 | 15 | 16.8 |
| 14 | 108.2 | 79.3 | 1348 | 29.57 | 1618 | 237 | 0.0673 | 0.3038 | 15.6 | 16 |
| 15 | 164.2 | 65.7 | 1996 | 30.07 | 1594 | 265 | 0.0753 | 0.5115 | 13.4 | 22.7 |
| 16 | 149.2 | 75.3 | 1780 | 30.22 | 1587 | 273 | 0.0777 | 0.4423 | 18.3 | 22.7 |
| 17 | 121.9 | 76.3 | 1540 | 31.32 | 1536 | 332 | 0.0942 | 0.3654 | 15.2 | 17.1 |
| 18 | 77.2 | 71.6 | 1148 | 31.86 | 1513 | 360 | 0.1021 | 0.2397 | 22.3 | 23.1 |
| 19 | 150.8 | 69.3 | 1876 | 31.96 | 1509 | 364 | 0.1035 | 0.4731 | 14.5 | 21.4 |
| 20 | 125.1 | 71.0 | 1652 | 33.22 | 1458 | 425 | 0.1207 | 0.4013 | 12.7 | 13.9 |
| 21 | 106.5 | 70.4 | 1500 | 34.16 | 1422 | 468 | 0.1328 | 0.3526 | 13.9 | 15.9 |
| 22 | 82.5 | 68.7 | 1280 | 34.57 | 1407 | 486 | 0.1379 | 0.2821 | 20.2 | 22.5 |
| 23 | 146.1 | 60.0 | 1960 | 34.92 | 1395 | 501 | 0.1422 | 0.5000 | 16.1 | 22.8 |
| 24 | 113.4 | 67.6 | 1612 | 35.28 | 1383 | 516 | 0.1465 | 0.3885 | 12.9 | 15.9 |
| 25 | 94.3 | 66.7 | 1448 | 36.24 | 1351 | 555 | 0.1577 | 0.3359 | 17.4 | 20.9 |
| 26 | 112.1 | 61.5 | 1692 | 37.60 | 1309 | 607 | 0.1725 | 0.4141 | 14.5 | 17.9 |
| 27 | 76.0 | 60.0 | 1360 | 39.35 | 1260 | 670 | 0.1904 | 0.3077 | 24.7 | 26.6 |
| 28 | 76.0 | 64.0 | 1296 | 37.32 | 1317 | 597 | 0.1696 | 0.2872 | 26.2 | 27.7 |
| 29 | 76.0 | 62.0 | 1328 | 38.35 | 1287 | 635 | 0.1804 | 0.2974 | 26.6 | 28.1 |
| 30 | 76.0 | 61.9 | 1328 | 38.36 | 1287 | 635 | 0.1805 | 0.2974 | 26.4 | 27.9 |
| 31 | 76.0 | 60.8 | 1348 | 38.95 | 1270 | 656 | 0.1865 | 0.3038 | 26.2 | 28.1 |
| 32 | 76.0 | 60.0 | 1360 | 39.35 | 1260 | 670 | 0.1904 | 0.3077 | 26 | 27.4 |

Example 1 is the modelled known separator 2 comprising the modelled known tray units 10, Example 2 is the modelled first separator 102 comprising the modelled first tray units 110, Example 23 is the modelled second separator 202 comprising the modelled second tray units 210 and Example 27 is the modelled third separator 302 comprising the modelled third tray units 310. It will be appreciated that Figures 1 to 16 are schematic, and, thus, certain relative dimensions shown in Figures 1 to 16 may not be to scale.

As shown, the underflow collection efficiency *η_{underflow}* and total collection efficiency *ηₜₒₜₐₗ* of the modelled first separator 102 comprising the modelled first tray units 110 (8.1% and 8.5%, respectively) is less than the underflow collection efficiency *η_{underflow}* and total collection efficiency *ηₜₒₜₐₗ* of the modelled known separator 2 comprising the modelled known tray units 10 (12.9% and 18%, respectively). In contrast, the underflow collection efficiency *η_{underflow}* and total collection efficiency *ηₜₒₜₐₗ* of the modelled second separator 202 comprising the modelled second tray units 210 (16.1% and 22.8%, respectively) is greater than the underflow collection efficiency *η_{underflow}* and total collection efficiency *ηₜₒₜₐₗ* of the modelled known separator 2 comprising the modelled known tray units 10. In addition, the underflow collection efficiency *η_{underflow}* and total collection efficiency *ηₜₒₜₐₗ* of the modelled third separator 302 comprising the modelled third tray units 310 (24.7% and 26.6%, respectively) is greater than the underflow collection efficiency *η_{underflow}* and total collection efficiency *ηₜₒₜₐₗ* of the modelled second separator 202 comprising the modelled second tray units 210.

Examples 1, 2, 23 and 27 (corresponding to the known separator 2, the first separator 102, the second separator 202 and the third separator 302, respectively), were also modelled at additional tray loading rates of 5.3 L/s/m², 8 L/s/m² and 11.9 L/s/m² (i.e. in addition to being modelled at the single tray loading rate of 10.6 L/s/m²).

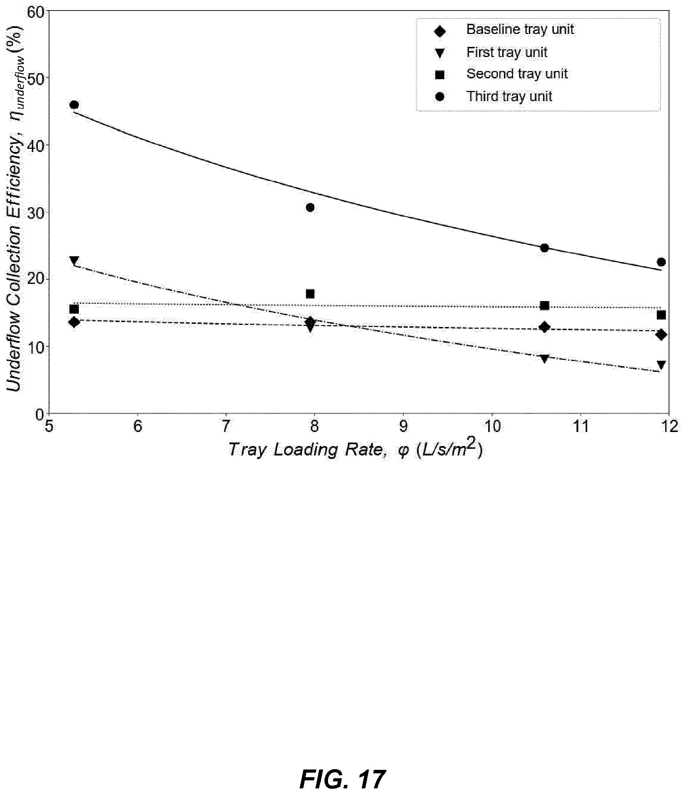

**Figure 17** is a line graph showing the effect of the tray loading rate φ on the underflow collection efficiency *η_{underflow}* of the baseline separator 2, the first separator 102, the second separator 202 and the third separator 302. As shown, the underflow collection efficiency *η_{underflow}* of the second separator 202 is better than the underflow collection efficiency *η_{underflow}* of the baseline separator 2 at all tray loading rates. In addition, the underflow collection efficiency *η_{underflow}* of the third separator 302 is better than the underflow collection efficiency *η_{underflow}* of the second separator 202 at all tray loading rates. Although the underflow collection efficiency *η_{underflow}* of the second separator 202 is lower than the underflow collection efficiency *η_{underflow}* of the first separator 102 at a tray loading rate of approximately 5.25 L/s/m², and although the underflow collection efficiency *η_{underflow}* of the first separator 102 is greater than the underflow collection efficiency *η_{underflow}* of the baseline separator 2 and the underflow collection efficiency *η_{underflow}* of the second separator 202 at a tray loading rate of approximately 5.25 L/s/m², this tray loading rate is not typical during the operation of such separators.

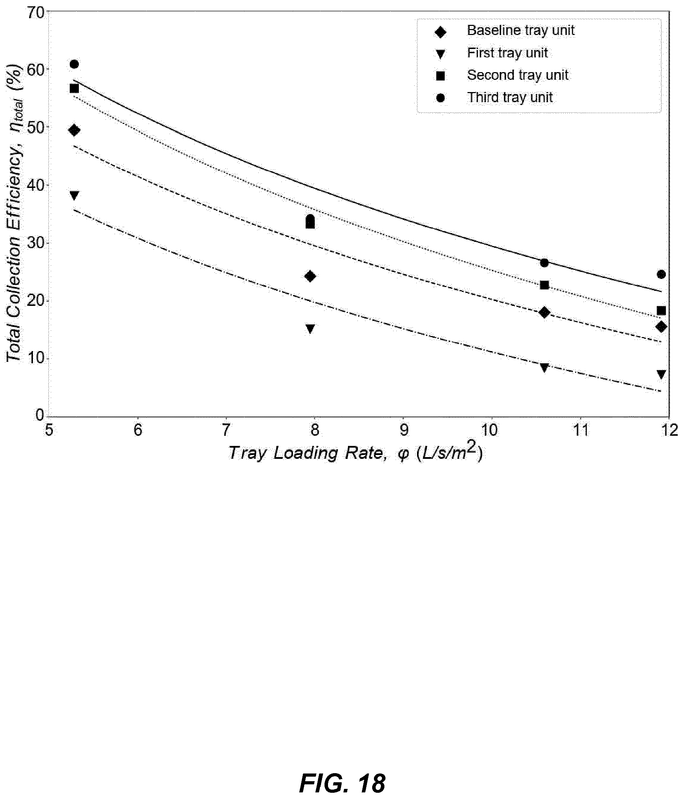

**Figure 18** is a line graph showing the effect of the tray loading rate φ on the total collection efficiency *ηₜₒₜₐₗ* of the baseline separator 2, the first separator 102, the second separator 202 and the third separator 302. As shown, the total collection efficiency *ηₜₒₜₐₗ* of the known separator 2 is better than the total collection efficiency *ηₜₒₜₐₗ* of the first separator 102 at all tray loading rates. In addition, the total collection efficiency *ηₜₒₜₐₗ* of the second separator 202 is better than the total collection efficiency *ηₜₒₜₐₗ* of the baseline separator 2 at all tray loading rates. Further, the total collection efficiency *ηₜₒₜₐₗ* of the third separator 302 is better than the total collection efficiency *ηₜₒₜₐₗ* of the second separator 202 at all tray loading rates.

## Claims

1. A separator (202, 302) for separating solids from a solid-liquid mixture, the separator (202, 302) having an axis (208, 308) and comprising a tray assembly (204, 304), the tray assembly (204, 304) comprising a plurality of nested tray units (210, 310) and a tangential inlet arrangement, wherein each tray unit (210, 310) comprises:
an outlet edge (214, 314) defining an outlet opening (234, 334), the outlet opening (234, 334) having a centroid (236, 336) through which the axis (208, 308) of the separator (202, 302) extends;
an overflow edge (212, 312) defining an overflow opening (232, 332); and
a surface (216, 316) extending between the outlet edge (214, 314) and the overflow edge (212, 312), the surface (216, 316) defining an internal volume (215, 315) of the tray unit (210, 310) and an inlet opening (230, 330) for receiving a respective portion of the solid-liquid mixture into the internal volume (215, 315), the surface (216, 316) having a settling portion (226, 326), wherein the settling portion (226, 326) faces the axis (208, 308) of the separator (202, 302) and tapers inwardly toward the axis (208, 308) of the separator (202, 302) in a direction (235, 335) toward the outlet edge (214, 314),
**characterized in that** for each of the plurality of tray units:
a respective cross-sectional area bounded by the settling portion (226, 326) and defined perpendicular to the axis (208, 308) of the separator (202, 302) is at a maximum on a respective first plane (238, 338) of the tray unit (210, 310),
a respective cross-sectional profile (241, 341) of the settling portion (226, 326) on the respective first plane (238, 338) has a respective centroid (240, 340),
a respective first distance (d₁) measured perpendicular to the axis (208, 308) between a respective centroid of the inlet opening (230, 330) and the respective centroid (240, 340) of the cross-sectional profile (241, 341) is greater than a respective second distance (d₂) measured perpendicular to the axis (208, 308) between the respective centroid of the inlet opening (230, 330) and the axis (208, 308) of the separator (202, 302).

2. A separator (202, 302) as claimed in claim 1, wherein the centroid (240, 340) of the cross-sectional profile (241, 341) of the settling portion (226, 326) on the first plane (238, 338) is offset away from the axis (208, 308) of the separator (202, 302) by a separation distance (d₃), wherein a ratio (rₒ) of the separation distance (d₃) to a maximum width (w₂) of the cross-sectional profile (241, 341) of the settling portion (226, 326) on the first plane (238, 338) is greater than 0.03, for example, greater than 0.07, or greater than 0.14, or greater than 0.16, or greater than 0.17.

3. A separator (202, 302) as claimed in claim 1 or 2, wherein the centroid (240, 340) of the cross-sectional profile (241, 341) of the settling portion (226, 326) on the first plane (238, 338) is offset away from the axis (208, 308) of the separator (202, 302) by a separation distance (d₃), wherein a ratio (rₒ) of the separation distance (d₃) to a maximum width (w₂) of the cross-sectional profile (241, 341) of the settling portion (226, 326) on the first plane (238, 338) is less than 0.19, for example, less than 0.185.

4. A separator (302) as claimed in any preceding claim, wherein each of the tray units (310) further comprises a second plane (356) that extends perpendicular to the axis (308) of the separator (202, 302) and is equidistant from the first plane (338) and the centroid (336) of the outlet opening (334) of the respective tray unit (310), wherein a first difference between a maximum width (w₃) of the cross-sectional profile (341) of the settling portion (326) on the second plane (356) and a maximum width (w₁) of the outlet opening (334) is less than half a second difference between a maximum width (w₂) of the cross-sectional profile (341) of the settling portion (326) on the first plane (338) and the maximum width (w₁) of the outlet opening (334).

5. A separator (302) as claimed in claim 4, wherein a ratio (r_{c}) of the first difference to the second difference is less than 0.38, for example, less than 0.35, or less than 0.33, or less than 0.32, or less than 0.307, or less than 0.303.

6. A separator (302) as claimed in claim 4 or 5, wherein a ratio (r_{c}) of the first difference to the second difference is greater than 0.285, for example, greater than 0.29.

7. A separator (302) as claimed in any of claims 5 to 6, wherein the cross-sectional profile of the settling portion is concave.

8. A separator (202, 302) as claimed in any preceding claim, wherein the outlet opening (234, 334) of each of the plurality of tray units (210, 310) is circular.

9. A separator (202, 302) as claimed in any preceding claim, wherein the surface (216, 316) of each of the plurality of tray units (210, 310) further comprises a lip portion (218, 318), wherein the lip portion (218, 318) of each of the tray units (210, 310) faces away from the axis (208, 308) of the separator (202, 302) and defines the overflow edge (212, 312) of the respective tray unit (210, 310), wherein the lip portion (218, 318) of each of the tray units (210, 310) is parallel with a portion of the settling portion (226, 326) of the respective tray unit (210, 310).

10. A separator (202, 302) as claimed in any preceding claim, wherein the separator (202, 302) further comprises a plurality of inlet passageways (250, 350), wherein each of the plurality of inlet passageways (250, 350) is configured to supply a portion of the solid-liquid mixture into the internal volume (215, 315) of a respective tray unit (210, 310) via its respective inlet opening (230, 330), wherein a centreline (255, 355) of each of the inlet passageways (250, 350) is disposed on a respective inlet plane (264, 364) that is parallel to the axis (208, 308) of the separator (202, 302), wherein the centroid (240, 340) of the cross-sectional profile (241, 341) of the settling portion (226, 326) on the first plane (238, 338) of each of the tray units (210, 310) is offset away from the axis (208, 308) of the separator (202, 302) in a direction (243, 343) that is perpendicular to the inlet plane (264, 364) of the respective inlet passageway (250, 350) that supplies the respective tray unit (210, 310) with the respective portion of the solid-liquid mixture.

11. A separator (202, 302) as claimed in any preceding claim, wherein the separator (202, 302) comprises a vessel (206, 306) and a sump (253, 353), wherein the tray assembly (204, 304) is disposed within the vessel (206, 306), wherein a base of the treatment vessel (206, 306) comprises a recess (254, 354) that opens into the sump (253, 353), wherein a lowermost tray unit (210, 310) of the plurality of tray units (210, 310) is disposed within the recess (254, 354).

12. A separator (202, 302) as claimed in claim 11, wherein a portion of the lowermost tray unit (210, 310) of the plurality of tray units (210, 310) defining the surface (216, 316) of the lowermost tray unit (210, 310) is parallel with a surface of the recess (254, 354).

13. A separator (202, 302) as claimed in claim 11 or 12, wherein a minimum gap (49) exists between the tray assembly (204, 304) and the vessel (206, 306), wherein the minimum gap (49) between the tray assembly (204, 304) and the vessel (206, 306) is less than 182 mm, for example, less than 180 mm, or less than 178 mm, or less than 174 mm, or less than 168 mm, or less than 165 mm, for example, less than 162 mm, or less than 160 mm, or less than 155 mm, or less than 150 mm, or less than 148 mm, or less than 140 mm, or less than 130 mm, or less than 124 mm, or less than 118 mm, or less than 113 mm, or less than 110 mm, or less than 107 mm, or less than 105 mm, or less than 100 mm, or less than 90 mm, or less than 80 mm, or less than 77 mm, or less than 70 mm, or less than 65 mm.

14. A separator (202, 302) as claimed in any preceding claim, wherein a minimum gap (47) exists between the tray units (210, 310) of the tray assembly (204, 304), wherein the minimum gap (47) between the tray units (210, 310) of the tray assembly (204, 304) is less than 87 mm, for example, less than 86 mm, less than 83 mm, or less than 80 mm, or less than 77 mm, or less than 75 mm, or less than 70 mm, or less than 68 mm, or less than 67 mm, or less than 65 mm, or less than 63 mm, or less than 61 mm; or less than 59 mm; or less than 50 mm.

## Patentansprüche

1. Separator (202, 302) zum Abtrennen von Feststoffen aus einem Fest-Flüssig-Gemisch, wobei der Separator (202, 302) eine Achse (208, 308) aufweist und eine Schalenanordnung (204, 304) umfasst, wobei die Schalenanordnung (204, 304) eine Mehrzahl von geschachtelten Schaleneinheiten (210, 310) und eine tangentiale Einlassanordnung umfasst, wobei jede Schaleneinheit (210, 310) umfasst:
eine Auslasskante (214, 314), die eine Auslassöffnung (234, 334) definiert, wobei die Auslassöffnung (234, 334) einen Flächenschwerpunkt (236, 336) aufweist, durch den die Achse (208, 308) des Separators (202, 302) verläuft;
eine Überlaufkante (212, 312), die eine Überlauföffnung (232, 332) definiert; und
eine Oberfläche (216, 316), die zwischen der Auslasskante (214, 314) und der Überlaufkante (212, 312) verläuft, wobei die Oberfläche (216, 316) ein Innenvolumen (215, 315) der Schaleneinheit (210, 310) und eine Einlassöffnung (230, 330) zum Aufnehmen eines entsprechenden Teils des Fest-Flüssig-Gemischs in das Innenvolumen (215, 315) definiert, wobei die Oberfläche (216, 316) einen Absetzabschnitt (226, 326) aufweist, wobei der Absetzabschnitt (226, 326) zu der Achse (208, 308) des Separators (202, 302) zeigt und nach innen zu der Achse (208, 308) des Separators (202, 302) in einer in einer Richtung (235, 335) zu der Auslasskante (214, 314) verjüngt ist,
**dadurch gekennzeichnet, dass** für jede der Mehrzahl von Schaleneinheiten:
eine entsprechende Querschnittsfläche, die durch den Absetzabschnitt (226, 326) begrenzt wird und senkrecht zu der Achse (208, 308) des Separators (202, 302) definiert ist, in einer entsprechenden ersten Ebene (238, 338) der Schaleneinheit (210, 310) maximal ist,
ein entsprechendes Querschnittsprofil (241, 341) des Absetzabschnitts (226, 326) in der entsprechenden ersten Ebene (238, 338) einen entsprechenden Flächenschwerpunkt (240, 340) aufweist,
ein entsprechender erster Abstand (d₁), gemessen senkrecht zu der Achse (208, 308) zwischen einem entsprechenden Flächenschwerpunkt der Einlassöffnung (230, 330) und dem entsprechenden Flächenschwerpunkt (240, 340) des Querschnittsprofils (241, 341), größer ist als ein entsprechender zweiter Abstand (d₂), gemessen senkrecht zu der Achse (208, 308) zwischen dem entsprechenden Flächenschwerpunkt der Einlassöffnung (230, 330) und der Achse (208, 308) des Separators (202, 302).

2. Separator (202, 302) nach Anspruch 1, wobei der Flächenschwerpunkt (240, 340) des Querschnittsprofils (241, 341) des Absetzabschnitts (226, 326) in der ersten Ebene (238, 338) von der Achse (208, 308) des Separators (202, 302) um einen Trennabstand (d₃) versetzt ist, wobei ein Verhältnis (rₒ) des Trennabstands (d₃) zu einer größten Breite (w₂) des Querschnittsprofils (241, 341) des Absetzabschnitts (226, 326) in der ersten Ebene (238, 338) größer als 0,03 ist, beispielsweise größer als 0,07 oder größer als 0,14 oder größer als 0,16 oder größer als 0,17.

3. Separator (202, 302) nach Anspruch 1 oder 2, wobei der Flächenschwerpunkt (240, 340) des Querschnittsprofils (241, 341) des Absetzabschnitts (226, 326) in der ersten Ebene (238, 338) von der Achse (208, 308) des Separators (202, 302) weg um einen Trennabstand (d₃) versetzt ist, wobei ein Verhältnis (rₒ) des Trennabstands (d₃) zu einer größten Breite (w₂) des Querschnittsprofils (241, 341) des Absetzabschnitts (226, 326) in der ersten Ebene (238, 338) kleiner als 0,19 ist, beispielsweise kleiner als 0,185.

4. Separator (302) nach einem der vorstehenden Ansprüche, wobei jede der Schaleneinheiten (310) ferner eine zweite Ebene (356) umfasst, die senkrecht zu der Achse (308) des Separators (202, 302) verläuft und äquidistant von der ersten Ebene (338) und dem Flächenschwerpunkt (336) der Auslassöffnung (334) der entsprechenden Schaleneinheit (310) ist, wobei eine erste Differenz zwischen einer maximalen Breite (w₃) des Querschnittsprofils (341) des Absetzabschnitts (326) in der zweiten Ebene (356) und einer maximalen Breite (w₁) der Auslassöffnung (334) kleiner als eine halbe zweite Differenz zwischen einer maximalen Breite (w₂) des Querschnittsprofils (341) des Absetzabschnitts (326) in der ersten Ebene (338) und der maximalen Breite (w₁) der Auslassöffnung (334) ist.

5. Separator (302) nach Anspruch 4, wobei ein Verhältnis (r_{c}) der ersten Differenz zu der zweiten Differenz kleiner als 0,38 ist, beispielsweise kleiner als 0,35 oder kleiner als 0,33 oder kleiner als 0,32 oder kleiner als 0,307 oder kleiner als 0,303.

6. Separator (302) nach Anspruch 4 oder 5, wobei ein Verhältnis (r_{c}) der ersten Differenz zu der zweiten Differenz größer als 0,285 ist, beispielsweise größer als 0,29.

7. Separator (302) nach einem der Ansprüche 5 bis 6, wobei das Querschnittsprofil des Absetzabschnitts konkav ist.

8. Separator (202, 302) nach einem der vorstehenden Ansprüche, wobei die Auslassöffnung (234, 334) von jeder aus der Mehrzahl von Schaleneinheiten (210, 310) kreisförmig ist.

9. Separator (202, 302) nach einem der vorstehenden Ansprüche, wobei die Oberfläche (216, 316) von jeder aus der Mehrzahl von Schaleneinheiten (210, 310) ferner einen Lippenabschnitt (218, 318) umfasst, wobei der Lippenabschnitt (218, 318) jeder der Schaleneinheiten (210, 310) von der Achse (208, 308) des Separators (202, 302) weg zeigt und die Überlaufkante (212, 312) der entsprechenden Schaleneinheit (210, 310) definiert, wobei der Lippenabschnitt (218, 318) jeder der Schaleneinheiten (210, 310) parallel zu einem Abschnitt des Absetzabschnitts (226, 326) der entsprechenden Schaleneinheit (210, 310) ist.

10. Separator (202, 302) nach einem der vorstehenden Ansprüche, wobei der Separator (202, 302) ferner eine Mehrzahl von Einlassdurchgängen (250, 350) umfasst, wobei jeder aus der Mehrzahl von Einlassdurchgängen (250, 350) dazu ausgelegt ist, einen Teil des Fest-Flüssig-Gemischs über seine entsprechende Einlassöffnung (230, 330) in das Innenvolumen (215, 315) einer entsprechenden Schaleneinheit (210, 310) zuzuführen, wobei eine Mittellinie (255, 355) jedes der Einlassdurchgänge (250, 350) in einer entsprechenden Einlassebene (264, 364) angeordnet ist, die parallel zu der Achse (208, 308) des Separators (202, 302) ist, wobei der Flächenschwerpunkt (240, 340) des Querschnittsprofils (241, 341) des Absetzabschnitts (226, 326) in der ersten Ebene (238, 338) jeder der Schaleneinheiten (210, 310) von der Achse (208, 308) des Separators (202, 302) weg in einer Richtung (243, 343) versetzt ist, die senkrecht ist zu der Einlassebene (264, 364) des entsprechenden Einlassdurchgangs (250, 350), der die entsprechende Schaleneinheit (210, 310) mit dem entsprechenden Anteil des Fest-Flüssig-Gemisches versorgt.

11. Separator (202, 302) nach einem der vorstehenden Ansprüche, wobei der Separator (202, 302) einen Behälter (206, 306) und einen Sumpf (253, 353) umfasst, wobei die Schalenanordnung (204, 304) innerhalb des Behälters (206, 306) angeordnet ist, wobei eine Basis des Behandlungsbehälters (206, 306) eine Vertiefung (254, 354) umfasst, die sich in den Sumpf (253, 353) öffnet, wobei eine unterste Schaleneinheit (210, 310) der Mehrzahl von Schaleneinheiten (210, 310) in der Vertiefung (254, 354) angeordnet ist.

12. Separator (202, 302) nach Anspruch 11, wobei ein Abschnitt der untersten Schaleneinheit (210, 310) der Mehrzahl von Schaleneinheiten (210, 310), der die Oberfläche (216, 316) der untersten Schaleneinheit (210, 310) definiert, parallel zu einer Oberfläche der Vertiefung (254, 354) ist.

13. Separator (202, 302) nach Anspruch 11 oder 12, wobei ein minimaler Spalt (49) zwischen der Schalenanordnung (204, 304) und dem Behälter (206, 306) vorliegt, wobei der minimale Spalt (49) zwischen der Schalenanordnung (204, 304) und dem Behälter (206, 306) weniger als 182 mm beträgt, beispielsweise weniger als 180 mm oder weniger als 178 mm oder weniger als 174 mm oder weniger als 168 mm, oder weniger als 165 mm, beispielsweise weniger als 162 mm oder weniger als 160 mm oder weniger als 155 mm oder weniger als 150 mm oder weniger als 148 mm oder weniger als 140 mm oder weniger als 130 mm oder weniger als 124 mm oder weniger als 118 mm oder weniger als 113 mm oder weniger als 110 mm oder weniger als 107 mm oder weniger als 105 mm oder weniger als 100 mm, oder weniger als 90 mm oder weniger als 80 mm oder weniger als 77 mm oder weniger als 70 mm oder weniger als 65 mm.

14. Separator (202, 302) nach einem der vorstehenden Ansprüche, wobei ein minimaler Spalt (47) zwischen den Schaleneinheiten (210, 310) der Schalenanordnung (204, 304) vorliegt, wobei der minimale Spalt (47) zwischen den Schaleneinheiten (210, 310) der Schalenanordnung (204, 304) weniger als 87 mm beträgt, beispielsweise weniger als 86 mm, weniger als 83 mm oder weniger als 80 mm oder weniger als 77 mm oder weniger als 75 mm oder weniger als 70 mm oder weniger beträgt. oder weniger als 68 mm oder weniger als 67 mm oder weniger als 65 mm oder weniger als 63 mm oder weniger als 61 mm oder weniger als 59 mm oder weniger als 50 mm.

## Revendications

1. Séparateur (202, 302) pour séparer des solides d'un mélange solide-liquide, le séparateur (202, 302) ayant un axe (208, 308) et comprenant un ensemble de plateau (204, 304), l'ensemble de plateau (204, 304) comprenant une pluralité d'unités de plateau emboîtées (210, 310) et un agencement d'entrée tangentiel, dans lequel chaque unité de plateau (210, 310) comprend :
un bord de sortie (214, 314) définissant une ouverture de sortie (234, 334), l'ouverture de sortie (234, 334) ayant un centroïde (236, 336) à travers lequel s'étend l'axe (208, 308) du séparateur (202, 302) ;
un bord de trop-plein (212, 312) définissant une ouverture de trop-plein (232, 332) ; et
une surface (216, 316) s'étendant entre le bord de sortie (214, 314) et le bord de trop-plein (212, 312), la surface (216, 316) définissant un volume interne (215, 315) de l'unité de plateau (210, 310) et une ouverture d'entrée (230, 330) pour recevoir une partie respective du mélange solide-liquide dans le volume interne (215, 315), la surface (216, 316) ayant une partie de sédimentation (226, 326), dans lequel la partie de sédimentation (226, 326) fait face à l'axe (208, 308) du séparateur (202, 302) et s'effile vers l'intérieur vers l'axe (208, 308) du séparateur (202, 302) dans une direction (235, 335) vers le bord de sortie (214, 314),
**caractérisé en ce que**, pour chacun de la pluralité d'unités de plateau :
une zone de section transversale respective bornée par la partie de sédimentation (226, 326) et définie perpendiculairement à l'axe (208, 308) du séparateur (202, 302) est à un maximum sur un premier plan respectif (238, 338) de l'unité de plateau (210, 310),
un profil de section transversale respectif (241, 341) de la partie de sédimentation (226, 326) sur le premier plan respectif (238, 338) a un centroïde respectif (240, 340),
une première distance respective (d₁) mesurée perpendiculairement à l'axe (208, 308) entre un centroïde respectif de l'ouverture d'entrée (230, 330) et le centroïde respectif (240, 340) du profil de section transversale (241, 341) est supérieure à une seconde distance respective (d₂) mesurée perpendiculairement à l'axe (208, 308) entre le centroïde respectif de l'ouverture d'entrée (230, 330) et l'axe (208, 308) du séparateur (202, 302).

2. Séparateur (202, 302) tel que revendiqué dans la revendication 1, dans lequel le centroïde (240, 340) du profil de section transversale (241, 341) de la partie de sédimentation (226, 326) sur le premier plan (238, 338) est décalé de façon éloignée de l'axe (208, 308) du séparateur (202, 302) selon une distance de séparation (d₃), dans lequel un rapport (rₒ) de la distance de séparation (d₃) relativement à une largeur maximum (w₂) du profil de section transversale (241, 341) de la partie de sédimentation (226, 326) sur le premier plan (238, 338) est supérieur à 0,03, par exemple, supérieur à 0,07, ou supérieur à 0,14, ou supérieur à 0,16, ou supérieur à 0,17.

3. Séparateur (202, 302) tel que revendiqué dans la revendication 1 ou 2, dans lequel le centroïde (240, 340) du profil de section transversale (241, 341) de la partie de sédimentation (226, 326) sur le premier plan (238, 338) est décalé de façon éloignée de l'axe (208, 308) du séparateur (202, 302) selon une distance de séparation (d₃), dans lequel un rapport (rₒ) de la distance de séparation (d₃) relativement à une largeur maximum (w₂) du profil de section transversale (241, 341) de la partie de sédimentation (226, 326) sur le premier plan (238, 338) est inférieur à 0,19, par exemple, inférieur à 0,185.

4. Séparateur (302) tel que revendiqué dans une quelconque revendication précédente, dans lequel chacune des unités de plateau (310) comprend en outre un second plan (356) qui s'étend perpendiculairement à l'axe (308) du séparateur (202, 302) et est équidistant du premier plan (338) et du centroïde (336) de l'ouverture de sortie (334) de l'unité de plateau respective (310), dans lequel une première différence entre une largeur maximum (w₃) du profil de section transversale (341) de la partie de sédimentation (326) sur le second plan (356) et une largeur maximum (w₁) de l'ouverture de sortie (334) est inférieure à la moitié d'une seconde différence entre une largeur maximum (w₂) du profil de section transversale (341) de la partie de sédimentation (326) sur le premier plan (338) et la largeur maximum (w₁) de l'ouverture de sortie (334).

5. Séparateur (302) tel que revendiqué dans la revendication 4, dans lequel un rapport (r_{c}) de la première différence relativement à la seconde différence est inférieur à 0,38, par exemple, inférieur à 0,35, ou inférieur à 0,33, ou inférieur à 0,32, ou inférieur à 0,307, ou inférieur à 0,303.

6. Séparateur (302) tel que revendiqué dans la revendication 4 ou 5, dans lequel un rapport (r_{c}) de la première différence relativement à la seconde différence est supérieur à 0,285, par exemple, supérieur à 0,29.

7. Séparateur (302) tel que revendiqué dans de quelconques des revendications 5 et 6, dans lequel le profil de section transversale de la partie de sédimentation est concave.

8. Séparateur (202, 302) tel que revendiqué dans une quelconque revendication précédente, dans lequel l'ouverture de sortie (234, 334) de chacune de la pluralité d'unités de plateau (210, 310) est circulaire.

9. Séparateur (202, 302) tel que revendiqué dans une quelconque revendication précédente, dans lequel la surface (216, 316) de chacun de la pluralité d'unités de plateau (210, 310) comprend en outre une partie lèvre (218, 318), dans lequel la partie lèvre (218, 318) de chacune des unités de plateau (210, 310) fait face à l'opposé de l'axe (208, 308) du séparateur (202, 302) et définit le bord de trop-plein (212, 312) de l'unité de plateau respective (210, 310), dans lequel la partie lèvre (218, 318) de chacune des unités de plateau (210, 310) est parallèle à une partie de la partie de sédimentation (226, 326) de l'unité de plateau respective (210, 310).

10. Séparateur (202, 302) tel que revendiqué dans une quelconque revendication précédente, dans lequel le séparateur (202, 302) comprend en outre une pluralité de voies de passage d'entrée (250, 350), dans lequel chacune de la pluralité de voies de passage d'entrée (250, 350) est configurée pour effectuer l'alimentation en une partie du mélange solide-liquide dans le volume interne (215, 315) d'une unité de plateau respective (210, 310) par l'intermédiaire de son ouverture d'entrée respective (230, 330), dans lequel une ligne centrale (255, 355) de chacune des voies de passage d'entrée (250, 350) est disposée sur un plan d'entrée respectif (264, 364) qui est parallèle à l'axe (208, 308) du séparateur (202, 302), dans lequel le centroïde (240, 340) du profil de section transversale (241, 341) de la partie de sédimentation (226, 326) sur le premier plan (238, 338) de chacune des unités de plateau (210, 310) est décalé de façon éloignée de l'axe (208, 308) du séparateur (202, 302) dans une direction (243, 343) qui est perpendiculaire au plan d'entrée (264, 364) de la voie de passage d'entrée respective (250, 350) qui alimente l'unité de plateau respective (210, 310) en la partie respective du mélange solide-liquide.

11. Séparateur (202, 302) tel que revendiqué dans une quelconque revendication précédente, dans lequel le séparateur (202, 302) comprend un récipient (206, 306) et un puisard (253, 353), dans lequel l'ensemble de plateau (204, 304) est disposé à l'intérieur du récipient (206, 306), dans lequel une base du récipient de traitement (206, 306) comprend un évidement (254, 354) qui s'ouvre dans le puisard (253, 353), dans lequel une unité de plateau la plus basse (210, 310) de la pluralité d'unités de plateau (210, 310) est disposée à l'intérieur de l'évidement (254, 354).

12. Séparateur (202, 302) tel que revendiqué dans la revendication 11, dans lequel une partie de l'unité de plateau la plus basse (210, 310) de la pluralité d'unités de plateau (210, 310) définissant la surface (216, 316) de l'unité de plateau la plus basse (210, 310) est parallèle à une surface de l'évidement (254, 354).

13. Séparateur (202, 302) tel que revendiqué dans la revendication 11 ou 12, dans lequel un écart minimum (49) existe entre l'ensemble de plateau (204, 304) et le récipient (206, 306), dans lequel l'écart minimum (49) entre l'ensemble de plateau (204, 304) et le récipient (206, 306) est inférieur à 182 mm, par exemple, inférieur à 180 mm, ou inférieur à 178 mm, ou inférieur à 174 mm, ou inférieur à 168 mm, ou inférieur à 165 mm, par exemple, inférieur à 162 mm, ou inférieur à 160 mm, ou inférieur à 155 mm, ou inférieur à 150 mm, ou inférieur à 148 mm, ou inférieur à 140 mm, ou inférieur à 130 mm, ou inférieur à 124 mm, ou inférieur à 118 mm, ou inférieur à 113 mm, ou inférieur à 110 mm, ou inférieur à 107 mm, ou inférieur à 105 mm, ou inférieur à 100 mm, ou inférieur à 90 mm, ou inférieur à 80 mm, ou inférieur à 77 mm, ou inférieur à 70 mm, ou inférieur à 65 mm.

14. Séparateur (202, 302) tel que revendiqué dans une quelconque revendication précédente, dans lequel un écart minimum (47) existe entre les unités de plateau (210, 310) de l'ensemble de plateau (204, 304), dans lequel l'écart minimum (47) entre les unités de plateau (210, 310) de l'ensemble de plateau (204, 304) est inférieur à 87 mm, par exemple, inférieur à 86 mm, inférieur à 83 mm, ou inférieur à 80 mm, ou inférieur à 77 mm, ou inférieur à 75 mm, ou inférieur à 70 mm, ou inférieur à 68 mm, ou inférieur à 67 mm, ou inférieur à 65 mm, ou inférieur à 63 mm, ou inférieur à 61 mm ; ou inférieur à 59 mm ; ou inférieur à 50 mm.
